# EUROPEAN PATENT APPLICATION

(11) **EP 3 885 488 A1**
(43) Date of publication of application: **29.09.2021**
(21) Application number: 19907996.3
(22) Date of filing: 20.12.2019
(51) Int. Cl.: D21C 5/02, A61L 2/18, B09B 3/00, C08J 11/16, D21B 1/32, A61L 101/10

(54) **METHOD FOR PRODUCING PULP FIBER RAW MATERIAL, AND PULP FIBER RAW MATERIAL AS CELLULOSE RAW MATERIAL**

(30) Priority: 31.12.2018 JP 2018248994
(71) Applicant: Unicharm Corporation, Shikokuchuo-shi, Ehime 799-0111 (JP)
(72) Inventor: KONISHI, Takayoshi, Kanonji-shi, Kagawa 769-1602 (JP); BANDOU, Takeshi, Kanonji-shi, Kagawa 769-1602 (JP); KURITA, Noritomo, Kanonji-shi, Kagawa 769-1602 (JP)
(74) Representative: Dolleymores
(86) International application number: PCT/JP2019/050212
(87) International publication number: WO 2020/141589

(57) **Abstract**

The purpose of the present invention is to provide a method for producing a pulp fiber raw material suitable as a cellulose raw material. This invention is as follows. A method for producing pulp fiber raw material as a cellulose raw material from pulp fiber to be treated, characterized by involving an ozone treatment step (S36) in which, by supplying an ozone-containing gas to a treatment tank containing a treatment liquid that contains pulp fiber inclusions containing pulp fibers to be treated, ozone-treated pulp fibers are formed from the pulp fibers to be treated, and an alkali treatment step (S39) for treating the aforementioned ozone-treated pulp fibers with an alkaline aqueous solution to form the aforementioned pulp fiber raw material having a hemicellulose content ratio less than 8.0 mass%.

## Description

### FIELD

The present disclosure relates to a method of producing a pulp fiber raw material as a cellulose raw material from a pulp fiber to be treated, and a pulp fiber raw material as a cellulose raw material derived from a used sanitary product containing the pulp fiber.

### BACKGROUND

There are studies of a technology for recycling a used sanitary product such as disposable diapers. For example, Patent Literature 1 discloses a method of producing recycled pulp mainly reusable as a sanitary product. Specifically, Patent Literature 1 discloses a method for collecting a pulp fiber from a used sanitary product containing a pulp fiber and a super absorbent polymer to produce a recycled pulp reusable as a sanitary product, the method including a step of decomposing the used sanitary product into the pulp fiber and other materials by exerting a physical force to the used sanitary product in an aqueous solution containing polyvalent metal ions or an acidic aqueous solution having pH of 2.5 or less, a step of separating the pulp fiber from a mixture of the pulp fiber and the other materials generated in the decomposition step, and a step of treating the separated pulp fiber in an ozone-containing aqueous solution having pH of 2.5 or less.

In Patent Literature 1, a reason for treating the pulp fiber with the ozone-containing aqueous solution is that a considerable amount of the super absorbent polymer remains in the separated pulp fiber and it is removed from the pulp fiber by oxidatively decomposing and solubilizing the super absorbent polymer. Patent Literature 1 discloses, as a method for treating the pulp fiber with the ozone-containing aqueous solution, a method of putting the ozone-containing aqueous solution in a treatment tank and putting the separated pulp fiber in the ozone-containing aqueous solution. In the method described above, it is preferable to appropriately stir the ozone-containing aqueous solution to generate a water flow during the treatment, and an ozone gas may be blown into the aqueous solution contained in a container, and a rise of ozone gas bubbles may generate the water flow in the ozone-containing aqueous solution.

### [CITATION LIST]

### [PATENT LITERATURE]

Patent Literature 1: Japanese Unexamined Patent Publication No.2016-881

### SUMMARY

### [TECHNICAL PROBLEM]

Patent Literature 1 discloses that a "recycled pulp fiber" is reused as a "pulp fiber" itself, but Patent Literature 1 does not disclose that the recycled pulp fiber is used as a pulp fiber raw material.

For the sanitary product, a pulp fiber is often used for an absorbent body and many of the pulp fibers are derived from coniferous trees. It is known that the pulp fiber derived from coniferous trees contains approximately 10 to approximately 25 mass% of hemicellulose, in addition to approximately 50 to approximately 60 mass% of cellulose. Hemicellulose is abundant in the cell wall of plants. In a case where the pulp fiber is used as a cellulose raw material, for example, the hemicellulose present in the pulp fiber remains in cellulose collected from the pulp fiber, and thus in a cellulose-derived product, and the remaining hemicellulose may disturb functions of the cellulose-derived product.

In the field of sanitary products, the pulp fiber is used for an absorbent body and the like, and hemicellulose contained in the pulp fiber is generally not removed from the pulp fiber, from viewpoints that the hemicellulose (i) does not easily disturb the function of the sanitary product (for example, absorbing properties), (ii) gives elasticity to the pulp fiber, and (iii) contributes to a yield of the pulp fiber to be produced. It is also preferable that the cellulose-derived product can be produced not only from pulp fibers derived from sanitary products but also from other pulp fibers to be treated, for example, virgin pulp fibers. Therefore, it is an aspect of the present disclosure to provide a method of producing a pulp fiber raw material suitable as a cellulose raw material.

### [SOLUTION TO PROBLEM]

The inventors have found a method of producing a pulp fiber raw material as a cellulose raw material from pulp fibers to be treated, the method comprising: an ozone treatment step of forming ozone-treated pulp fibers from the pulp fibers to be treated by supplying an ozone-containing gas to a treatment tank containing a treatment liquid containing a pulp fiber-containing material containing the pulp fibers to be treated; and an alkali treatment step of treating the ozone-treated pulp fibers with an alkaline aqueous solution and forming the pulp fiber raw material having a hemicellulose content of less than 8.0 mass%.

### [ADVANTAGEOUS EFFECT OF THE INVENTION]

The method of producing a pulp fiber raw material of the present disclosure can produce a pulp fiber raw material suitable as a cellulose raw material.

### BRIEF DESCRIPTION OF DRAWINGS

[FIG. 1]

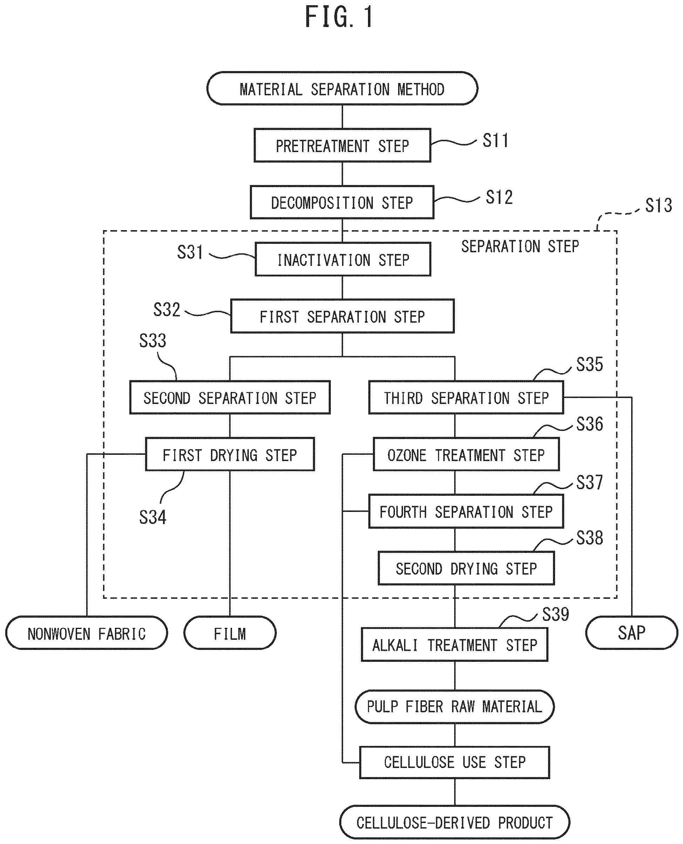

   FIG. 1 is a flow chart showing an embodiment according to the method of the present disclosure.
[FIG. 2]

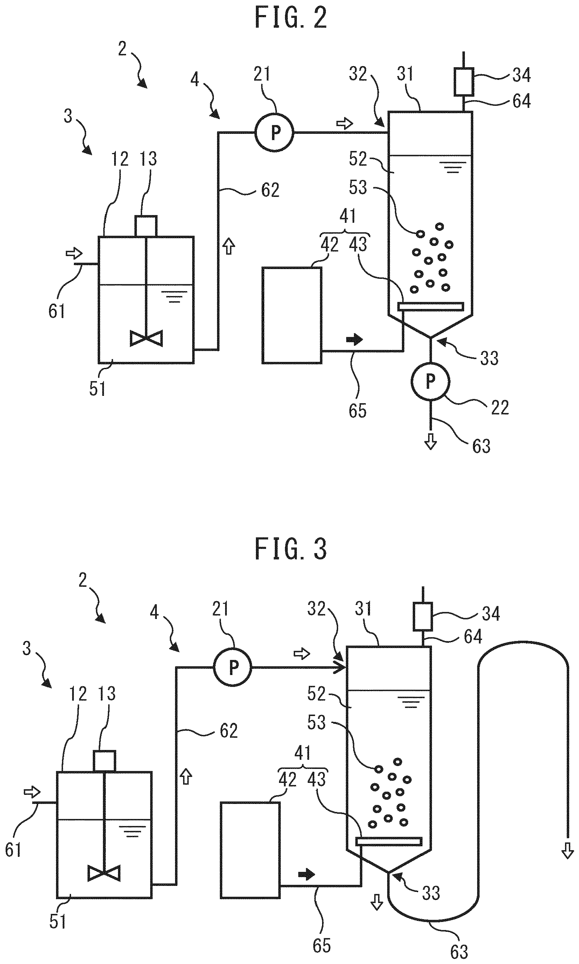

   FIG. 2 is a schematic view showing a configuration example of an apparatus of an ozone treatment step of FIG. 1.
[FIG. 3]
   FIG. 3 is a schematic view showing another configuration example of the apparatus of the ozone treatment step of FIG. 1.
[FIG. 4]

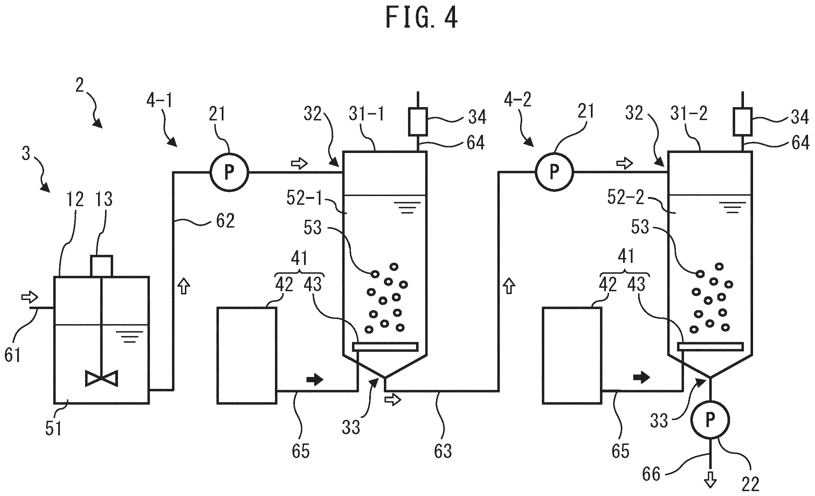

   FIG. 4 is a schematic view showing still another configuration example of the apparatus of the ozone treatment step of FIG. 1.

### DESCRIPTION OF EMBODIMENTS

The present disclosure specifically relates to the following aspects.

### [Aspect 1]

A method of producing a pulp fiber raw material as a cellulose raw material from pulp fibers to be treated, the method comprising:
an ozone treatment step of forming ozone-treated pulp fibers from the pulp fibers to be treated by supplying an ozone-containing gas to a treatment tank containing a treatment liquid containing a pulp fiber-containing material containing the pulp fibers to be treated; and
an alkali treatment step of treating the ozone-treated pulp fibers with an alkaline aqueous solution and forming the pulp fiber raw material having a hemicellulose content of less than 8.0 mass%.

In the above production method, a pulp fiber raw material having a predetermined hemicellulose content, that is, a pulp fiber raw material suitable as a cellulose raw material can be produced from the pulp fiber to be treated.

### [Aspect 2]

The method according to aspect 1, wherein
the pulp fiber raw material has a lignin content of 0.10 mass% or less.

It is known that pulp fiber contains lignin, in addition to cellulose. For example, it is known that the coniferous trees, which are often used in sanitary products, contain 20 mass% to 30 mass% of lignin. In addition, in a case where the pulp fiber is used as a cellulose raw material, for example, the lignin present in the pulp fiber remains in cellulose collected from the pulp fiber, and thus in a cellulose-derived product, and the remaining lignin may disturb functions of the cellulose-derived product. In the above production method, a pulp fiber raw material having a predetermined lignin content, that is, a pulp fiber raw material suitable as a cellulose raw material can be produced from the pulp fiber to be treated.

### [Aspect 3]

The method according to aspect 1 or 2, wherein
the pulp fiber raw material has a cellulose content of 94.0 mass% or more.

In the above production method, a pulp fiber raw material having a predetermined cellulose content, that is, a pulp fiber raw material suitable as a cellulose raw material can be produced from the pulp fiber to be treated.

### [Aspect 4]

The method according to any one of aspects 1 to 3, wherein
in the ozone treatment step, the ozone-containing gas is supplied to the treatment tank so that the ozone-treated pulp fibers have a hemicellulose content of 10.0 mass% or less.

In the above production method, in the ozone treatment step, the ozone treatment is performed so that the ozone-treated pulp fiber has a predetermined hemicellulose content, and accordingly, in the next alkali treatment step, the hemicellulose content of the ozone-treated pulp fiber can be efficiently decreased. Therefore, in the above production method, a pulp fiber raw material having a predetermined hemicellulose content, that is, a pulp fiber raw material suitable as a cellulose raw material can be easily produced from the pulp fiber to be treated.

### [Aspect 5]

The method according to any one of the aspects 1 to 4, wherein
in the ozone treatment step, the ozone-treated pulp fibers are formed by bringing the ozone-containing gas into contact with the pulp fiber-containing material so that a CT value, which is a product of an ozone concentration in the ozone-containing gas and a treatment time, is 100 to 12,000 ppm-min.

In the above production method, in the ozone treatment step, the pulp fiber raw material is formed by bringing the ozone-containing gas into contact with the pulp fiber-containing material under predetermined conditions. Therefore, in the above production method, a pulp fiber raw material having a predetermined hemicellulose content, that is, a pulp fiber raw material suitable as a cellulose raw material can be easily produced from the pulp fiber to be treated.

### [Aspect 6]

The method according to any one of aspects 1 to 5, wherein
in the alkali treatment step, the alkaline aqueous solution has a normality of 3.0 N or less.
In the above production method, since the alkaline aqueous solution has a predetermined normality in the alkali treatment step, the ozone-treated pulp fibers, the treatment tank, and the like are less likely to be damaged, and the waste liquid in the alkali treatment step can be easily treated.

### [Aspect 7]

The method according to aspect 6, wherein
in the alkali treatment step, the alkaline aqueous solution is added at a ratio of 10 to 40 L per 1 kg of dry mass of the ozone-treated pulp fibers.
In the above production method, since a predetermined amount of an alkaline aqueous solution having a predetermined normality is added in the alkali treatment step, the ozone-treated pulp fiber, the treatment tank, and the like are less likely to be damaged, and the waste liquid in the alkali treatment step can be easily treated.

### [Aspect 8]

The method according to any one of aspects 1 to 7, wherein
the pulp fiber raw material is a raw material for a cellulose nanofiber, viscose rayon, cellulose derivative, bioethanol, biobutanol, a molding material, or a processed paper product.

In the above production method, the pulp fiber raw material is a raw material for a predetermined use (for cellulose nanofiber, for viscose rayon, for cellulose derivative, for bioethanol, for biobutanol, for molding material, or for processed paper product). Therefore, the production method can produce a pulp fiber raw material that can be suitably used as a predetermined cellulose raw material.

### [Aspect 9]

The method according to any one of aspects 1 to 8, wherein
the method further comprises a cellulose use step of forming a cellulose nanofiber, viscose rayon, cellulose derivative, bioethanol, biobutanol, a molding material, or a processed paper product from the pulp fiber raw material.

The production method includes the predetermined cellulose use step, and a predetermined cellulose-derived product (cellulose nanofiber, viscose rayon, cellulose derivative, bioethanol, biobutanol, molding material, or processed paper product) can be efficiently produced.

### [Aspect 10]

A pulp fiber raw material as a cellulose raw material, wherein
the pulp fiber raw material has a hemicellulose content of less than 8.0 mass%.

Since the pulp fiber raw material has a predetermined hemicellulose content, it is suitable as a cellulose raw material.

### [Aspect 11]

A pulp fiber raw material as a cellulose raw material, wherein
the pulp fiber raw material has a cellulose content of 94.0 mass% or more.

Since the pulp fiber raw material has a predetermined cellulose content, it is suitable as a cellulose raw material.

### [Aspect 12]

The pulp fiber raw material according to aspect 10 or 11, wherein
the pulp fiber raw material has a lignin content of 0.10 mass% or less.
Since the pulp fiber raw material has a predetermined lignin content, it is suitable as a cellulose raw material.

### [Aspect 13]

The pulp fiber raw material according to any one of aspects 10 to 12, wherein
the pulp fiber raw material is derived from a used sanitary product containing pulp fibers.
Since the pulp fiber raw material is derived from the used sanitary product, it is preferable from a viewpoint of environmental protection.

### [Aspect 14]

The pulp fiber raw material according to any one of aspects 10 to 13, wherein
the pulp fiber raw material is a raw material for a cellulose nanofiber, viscose rayon, cellulose derivative, bioethanol, biobutanol, a molding material, or a processed paper product. The pulp fiber raw material is suitable as a cellulose raw material for a predetermined use.

### [Aspect 15]

A cellulose nanofiber, viscose rayon, cellulose derivative, bioethanol, biobutanol, a molding material, or a processed paper product, which is made from the pulp fiber raw material according to any one of aspects 10 to 14.
The cellulose nanofiber, the viscose rayon, the cellulose derivative, the molding material, or the processed paper product has a high cellulose content. The bioethanol and biobutanol have high ethanol and butanol contents, respectively.

### [Aspect 16]

The method according to any one of the aspects 1 to 15, wherein
the method further comprises:
a preparation step of preparing the treatment tank including a pulp fiber-containing material supply port, a treatment liquid discharge port, and an ozone-containing gas supply port arranged at a lower position of the treatment tank,
a pulp fiber-containing material supply step of supplying the pulp fiber-containing material to the treatment tank from the pulp fiber-containing material supply port,
an ozone-containing gas supply step of supplying the ozone-containing gas to the treatment liquid in the treatment tank from the ozone-containing gas supply port,
the ozone treatment step of forming the ozone-treated pulp fiber from the pulp fiber to be treated, by bringing the pulp fiber-containing material into contact with the ozone-containing gas while raising the ozone-containing gas in the treatment tank, and
a treatment liquid discharge step of discharging the treatment liquid containing the ozone-treated pulp fiber from the treatment liquid discharge port.

Since the hemicellulose has a lower specific gravity than cellulose, a pulp fiber having a relatively low hemicellulose content (pulp fiber having a relatively high cellulose content) tends to have a relatively high specific gravity than a pulp fiber having a relatively high hemicellulose content (pulp fiber having a relatively low cellulose content). Meanwhile, in a solution, the ozone-containing gas rises while consuming ozone, and accordingly, the ozone-containing gas existing at the lower position has a higher ozone content than the ozone-containing gas existing at an upper position (that is, it tends to be fresh).

The production method described above includes the predetermined preparation step, the pulp fiber-containing material supply step, the ozone-containing gas supply step, the ozone treatment step, and the treatment liquid discharge step. In the ozone treatment step, the pulp fiber-containing material and the ozone-containing gas are brought into contact with each other while raising the ozone-containing gas.

In the above production method, the pulp fiber having a relatively low hemicellulose content (pulp fiber having a relatively high cellulose content) has higher sedimentation properties than the pulp fiber having a relatively high hemicellulose content (pulp fiber having a relatively low cellulose content), and the fresh ozone-containing gas comes into contact with the pulp fiber having a relatively low hemicellulose content to further decompose the hemicellulose contained therein. Therefore, the production method can produce a pulp fiber raw material that can be suitably used as a cellulose raw material.

In general, the higher the lignin content ratio of pulp fibers, the lower the specific gravity tends to be. Therefore, in the production method described above, the pulp fibers having a relatively low lignin content ratio have a relatively high sedimentation properties than the pulp fibers having a relatively high lignin content ratio, and accordingly, the fresher ozone-containing gas can come into contact with the pulp fibers having a relatively low lignin content ratio to further decompose the lignin contained therein.

The ozone-containing gas supply port is located below the treatment tank, and specifically, a height of the treatment tank is preferably 30%, more preferably 20%, and even more preferably 10% from the bottom of the treatment tank. In addition, the pulp fibers-containing material supply port may be arranged at a lower side or an upper side of the ozone-containing gas supply port, and the treatment liquid discharge port may be arranged at a lower side or an upper side of the ozone-containing gas supply port.

The production method according to the aspect 16 includes both so-called continuous production method and batch production method. In addition, the "raising the ozone-containing gas" means that the ozone-containing gas is rising as a whole, and includes the raising of the ozone-containing gas as a whole in a vertical direction while being stirred in a horizontal direction, when the treatment liquid in the treatment tank is stirred.

### [Aspect 17]

The method according to the aspect 16, wherein
the treatment liquid discharge port is arranged on a lower side of the pulp fiber-containing material supply port, and
in the ozone treatment step, the pulp fiber-containing material is brought into contact with the ozone-containing gas while lowering the pulp fiber-containing material.

In the production method described above, since the falling pulp fiber-containing material is brought into contact with the raising ozone-containing gas, the frequency of contact of the pulp fiber-containing material with the ozone-containing gas increases, and the distribution of the hemicellulose content of the pulp fiber contained in the treatment liquid (pulp fiber after ozone treatment) is narrowed (less variation). In addition, since the fresh ozone-containing gas can come into contact with the pulp fiber having a relatively low hemicellulose content, the hemicellulose content of the pulp fiber contained in the treatment liquid (pulp fiber after ozone treatment) tends to be low. In addition, since the treatment liquid discharge port is disposed on a lower side of the pulp fiber-containing material supply port, the pulp fiber having a relatively low hemicellulose content (pulp fiber having a relatively high cellulose content) is easily discharged from the treatment liquid discharge port.

The production method according to the aspect 17 includes both so-called continuous production method and batch production method. In addition, the "lowering the pulp fibers-containing material" means that at least a part of the pulp fibers-containing material is lowered, for example, the entirety thereof when the entire treatment liquid in the treatment tank is lowered and a part of the pulp fibers-containing material lowering when the treatment liquid in the treatment tank is convected vertically may be included.

### [Aspect 18]

The method according to the aspect 16, wherein
the treatment liquid discharge port is arranged on an upper side of the pulp fiber-containing material supply port, and
in the ozone treatment step, the pulp fiber-containing material is brought into contact with the ozone-containing gas while raising the pulp fiber-containing material.

In the production method described above, the raising pulp fiber-containing material is brought into contact with the raising ozone-containing gas, and accordingly, the pulp fiber-containing material is in contact with the ozone-containing gas for a long time, and the hemicellulose content in the pulp fiber is lowered.

The production method according to the aspect 18 includes both so-called continuous production method and batch production method. In addition, the "raising the pulp fibers-containing material" means that at least a part of the pulp fibers-containing material rises, for example, the entirety thereof when the entire treatment liquid in the treatment tank rises and a part of the pulp fibers-containing material rising when the treatment liquid in the treatment tank is convected vertically may be included.

### [Aspect 19]

The method according to any one of the aspects 16 to 18 wherein
in the pulp fiber-containing material supply step, the pulp fiber-containing material is continuously supplied from the pulp fiber-containing material supply port to the treatment tank at a first flow rate, and
in the treatment liquid discharge step, the treatment liquid is continuously discharged from the treatment liquid discharge port at a second flow rate.

In the production method described above, the pulp fiber-containing material is continuously supplied from the pulp fiber-containing material supply port to the treatment tank at the first flow rate in the pulp fiber-containing material supply step, and the treatment liquid is continuously discharged from the treatment liquid discharge port at the second flow rate in the treatment liquid discharge step, and accordingly, the treatment time of the pulp fiber-containing material to be treated is uniform, and the distribution of the hemicellulose content of the pulp fiber raw material contained in the treatment liquid is narrowed (variation is reduced). Therefore, the production method can produce a pulp fiber raw material that can be suitably used as a cellulose raw material.

### [Aspect 20]

The method according to any one of the aspects 16 to 19, wherein
the pulp fiber-containing material contains the pulp fiber to be treated derived from a used sanitary product and a super absorbent polymer, and at least a part of the super absorbent polymer is dissolved in the treatment liquid in the ozone treatment step.

In the used sanitary product, in an absorbent body containing the pulp fiber and the super absorbent polymer, (i) the super absorbent polymer enlarges as it absorbs a liquid such as a bodily fluid and entrains the pulp fiber, (ii) the enlarged super absorbent polymers generate gel blocking while entraining the pulp fiber, and accordingly, the plurality of super absorbent polymers and the plurality of pulp fibers may form a coupling structure.

In the above production method, in the ozone treatment step, the pulp fiber-containing material and the ozone-containing gas are brought into contact with each other while raising the ozone-containing gas. In the free super absorbent polymer, the free pulp fiber, and the coupling structure, the free super absorbent polymers and coupling structure having a relatively low buoyancy tends to have higher sedimentation properties than the free pulp fiber having a relatively high buoyancy. Meanwhile, the ozone-containing gas rises while consuming ozone and treating the pulp fiber-containing material, and accordingly, the ozone-containing gas existing at the lower position has a higher ozone content than the ozone-containing gas existing at an upper position (that is, it tends to be fresh).

Therefore, in the production method described above, the free super absorbent polymer and the super absorbent polymer in the coupling structure having a relatively high sedimentation properties are accurately oxidatively decomposed by the fresher ozone-containing gas to separate the pulp fiber configured the coupling structure, and the free pulp fiber having a relatively low sedimentation properties and relatively taking a period of time until arriving the treatment liquid discharge port can be treated by the ozone-containing gas by taking time to decompose hemicellulose contained in the free pulp fiber.

In addition, the pulp fiber having a relatively low hemicellulose content (pulp fiber having a relatively high cellulose content) has higher sedimentation properties than the pulp fiber having a relatively high hemicellulose content (pulp fiber having a relatively low cellulose content), and in the production method described above, the fresher ozone-containing gas comes into contact with the pulp fiber having a relatively low hemicellulose content to further decompose the hemicellulose contained therein. Therefore, the production method can produce a pulp fiber raw material that can be suitably used as a cellulose raw material.

### [Aspect 21]

The method according to the aspect 20, wherein
the treatment liquid is acidic, weakly acidic, or neutral.
In the production method described above, the treatment liquid is acidic (specifically, pH of more than 0.0 and pH of less than 3.0, preferably pH of 2.5 or more and pH of less than 3.0), weakly acidic (specifically, pH of 3.0 or more and pH of less than 6.0), or neutral (specifically, pH of 6.0 or more and pH of 8.0 or less, preferably pH of 6.0 or more and pH of 7.0 or less). Accordingly, the super absorbent polymer to be treated can be inactivated by acid, or if the super absorbent polymer to be treated is already inactivated, the super absorbent polymer can be continuously maintained in the inactivated state. As a result, even when the super absorbent polymer and the pulp fiber form the coupling structure, the ozone in the ozone-containing gas can remove the super absorbent polymer constituting the coupling structure, and the ozone in the ozone-containing gas can act on the pulp fiber constituting the coupling structure to decrease the hemicellulose content of the pulp fiber. Therefore, the production method can produce a pulp fiber raw material that can be suitably used as a cellulose raw material.

### [Aspect 22]

The method according to the aspect 20 or 21, wherein
the method further comprises an inactivation step of inactivating the super absorbent polymer with an acid before the pulp fiber-containing material supply step.

Since the production method described above further includes the predetermined inactivation step, even when the super absorbent polymer and the pulp fiber form the coupling structure, the ozone in the ozone-containing gas can remove the super absorbent polymer constituting the coupling structure immediately after the pulp fiber-containing material containing the super absorbent polymer and the pulp fiber derived from the used sanitary product is supplied to the treatment tank, and the ozone in the ozone-containing gas can act on the pulp fiber constituting the coupling structure to decrease the hemicellulose content of the pulp fiber. Therefore, the production method can produce a pulp fiber raw material that can be suitably used as a cellulose raw material.

### [Aspect 23]

The method according to aspect 22, wherein
the acid is an acid capable of forming a complex with a metal ion contained in excrement.

In the production method described above, since the acid is an acid capable of forming a complex with a metal ion contained in excrement, the produced pulp fiber raw material is less likely to contain the metal ions. Accordingly, from pulp fiber raw material, in the step of using the pulp fiber raw material, metal ions and their precipitates are less likely to damage the equipment used in the step of using the pulp fiber raw material, and are less likely to disturb the miniaturization of the pulp fiber raw material.

Hereinafter, a method of producing a pulp fiber raw material from a pulp fiber to be treated (hereinafter, may be simply referred to as a "method of producing a pulp fiber raw material") will be described. The pulp fiber to be treated is not particularly limited as long as it is a pulp fiber, and examples thereof include an unused pulp fiber (for example, virgin pulp fiber), a used pulp fiber (for example, pulp fiber derived from a used sanitary product), and the like.

The used sanitary product described above is a sanitary product used by a user and includes a sanitary product in a state where the user's liquid excrement is absorbed, a sanitary product which is used but does not absorb excrement, a sanitary product which is not used and discarded, and the like.

In the present specification, a term "to be treated" of the pulp fiber to be treated is a modifier for distinguishing a pulp fiber before the treatment from a pulp fiber raw material after the treatment, does not have other intentions. In addition, in the present specification, as the "pulp fiber to be treated", an embodiment of a used pulp fiber, particularly, a pulp fiber derived from the used sanitary product, is mentioned, in which the "pulp fiber to be treated" may be simply referred to as a "pulp fiber".

A configuration example of the sanitary product will be described. The sanitary product includes, for example, a liquid-permeable sheet, a liquid-impermeable sheet, and an absorbent body disposed between the liquid-permeable sheet and the liquid-impermeable sheet. Examples of sanitary product include a paper diaper, a urine absorbing pad, a sanitary napkin, a bed sheet, and a pet sheet.

Examples of a constituent member of the liquid-permeable sheet include a nonwoven fabric or a film, and specific examples thereof include a liquid-permeable nonwoven fabric, a synthetic resin film having liquid-permeable holes, and a composite sheet thereof. Examples of a constituent member of the liquid-impermeable sheet include a nonwoven fabric or a film, and specific examples thereof include a liquid-impermeable nonwoven fabric, a liquid-impermeable synthetic resin film, and a composite sheet thereof.

Examples of a constituent members of the absorbent body include an absorbent core (for example, a pulp fiber and a super absorbent polymer) and a core wrap. The pulp fibers are not particularly limited as long as they can be used as a sanitary product, and examples thereof include a cellulosic fiber. Examples of the cellulosic fiber include a wood pulp (for example, coniferous pulp or hardwood pulp), a crosslinked pulp, and a non-wood pulp. The super absorbent polymer (SAP) is not particularly limited as long as it can be used as a sanitary product, and examples thereof include polyacrylate-based, polysulfonate-based, and maleic anhydride-based polymers.

One surface and the other surface of the absorbent body are bonded to the liquid-permeable sheet and the liquid-impermeable sheet, respectively, via an adhesive. In a plan view, a portion (peripheral portion) of the liquid-permeable sheet which extends to an outer side of the absorbent body so as to surround the absorbent body is bonded to a portion (peripheral portion) of the liquid-impermeable sheet which extends to an outer side of the absorbent body to surround the absorbent body via an adhesive. Accordingly, the absorbent body is wrapped inside the bonded body of the liquid-permeable sheet and the liquid-impermeable sheet. The adhesive is not particularly limited as long as it can be used as a sanitary product and a bonding force is lowered by softening or the like due to hot water which will be described later, and examples thereof include a hot-melt type adhesive. Examples of the hot-melt type adhesive include a pressure-sensitive adhesive or a heatsensitive adhesive of a rubber-based entity such as styrene-ethylene-butadiene-styrene, styrenebutadiene-styrene, and styrene-isoprene-styrene, or an olefin-based entity such as polyethylene.

FIG. 1 is a flow chart showing a material separation method of separating the used sanitary product into constituent materials. This material separation method is a method of separating the used sanitary product into a film, a nonwoven fabric, a pulp fiber, and a super absorbent polymer. This material separation method includes a pretreatment step S11, a decomposition step S12, and a separation step S13. In the pretreatment step S11, the used sanitary product is swollen with water. In the decomposition step S12, a physical impact is applied to the swollen used sanitary product, and the used sanitary product is decomposed into a film, a nonwoven fabric, and a core wrap, and absorbent core (for example, pulp fiber and super absorbent polymer). In the separation step S13, the film, the nonwoven fabric, the pulp fiber, and the super absorbent polymer are separated.

If a mixture of the pulp fibers and the super absorbent polymer (pulp fiber-containing material) has been obtained in advance by any method, it is not necessary to perform the steps earlier than the method of producing the ozone-treated pulp fiber in the pretreatment step S11, the decomposition step S12, and the separation step S13. Hereinafter, each step will be described.

In the pretreatment step S11, a plurality of used sanitary products absorb water to be swollen, in a state where the sanitary products are collected from outside, that is, in a rolled state or a folded state without being destructed or cut, without inactivation of the super absorbent polymer of the absorbent body. In the present embodiment, the used sanitary products are made to absorb hot water and swell, or made to absorb water to be expanded and then the absorbed water is heated to be hot water. The hot water refers to water having a temperature higher than room temperature (20°C ± 15°C (5°C to 35°C): JISZ8703).

Normally, an amount of liquid excrement actually absorbed by the used sanitary product is extremely small, compared to a maximum absorption amount that sanitary products can absorb (for example, approximately 10 to 20 mass% of the maximum absorption amount). In the present embodiment, in the pretreatment step S11, by immersing the used sanitary product in hot water, an amount of water close to the maximum absorption amount of the used sanitary product (for example, 80 mass% or more of the maximum absorption amount) is absorbed. Alternatively, the used sanitary product is immersed in water at room temperature to absorb water to an amount close to the maximum absorption amount of the used sanitary product, and then the entire used sanitary product is heated to a temperature of hot water. Due to that, the used sanitary product can be brought into an extremely expanded state with hot water or water at room temperature (hereinafter, also simply referred to as "hot water"). Due to that, in the used sanitary product, an extremely high internal pressure is generated. In addition, an object of turning the water into hot water is mainly to weaken the adhesive strength of the adhesive as will be described later.

Here, in a case where the used sanitary product are initially immersed in hot water when it is rolled or folded with the liquid-impermeable sheet on the outside (the liquid-permeable sheet is hidden inside), and accordingly, the absorbent body of the used sanitary product absorbs hot water in the hot water and expands. Due to that, the internal pressure of the used sanitary product increases, and a force to open the used sanitary product outward is exerted to the used sanitary product, so that the used sanitary product in the rolled or folded state is opened outward and is in a substantially flat state. That is, the used sanitary product can be unfolded to be flattened in hot water. At this time, since the absorbent body of the used sanitary product absorbs a large amount of hot water and expands extremely, the surface thereof, that is, any portion of the liquid-permeable sheet and the liquid-impermeable sheet wrapping the absorbent body is likely to be easily burst. That is, in the pretreatment step S11, any surface of the used sanitary product can be in a state where it is likely to be torn and cut. In a case where the used sanitary product is in an unfolded state to be flattened from the beginning, any portion of the surface is likely to be easily burst as it is. This state cannot occur, in a case where the used sanitary product is broken or the like.

In addition, the used sanitary product is immersed in hot water and/or absorbs the hot water to soften an adhesive (for example, hot-melt adhesive) used for bonding constituent members to each other by the heat of the hot water, thereby reducing a bonding force of the adhesive. For example, the adhesive for bonding the peripheral portion of the liquid-permeable sheet and the peripheral portion of the liquid-impermeable sheet to each other can be softened by the heat of hot water to reduce the bonding force of the adhesive. In addition, the adhesive for bonding the liquid-permeable sheet and the absorbent body and the adhesive for bonding the liquid-impermeable sheet and the absorbent body can be softened by the heat of hot water to reduce the bonding force of the adhesives.

As described above, in the pretreatment step S11, the expansion of the absorbent body of the used sanitary product can generate a state where any portion of the surface of the used sanitary product is likely to burst, and a state where the bonding force of the adhesive is reduced. By setting the used sanitary product in such a state, the used sanitary product can be reliably decomposed in the decomposition step which will be described later.

A temperature of the hot water in the pretreatment step S11 is not particularly limited as long as the adhesive of the used sanitary product can be softened, and for example, it is 60°C or higher and preferably 70°C or higher and 98°C or lower. By setting the temperature of the hot water to 70°C or higher, the adhesive for bonding the constituent members to each other can be further softened by the heat of the hot water, and the bonding force of the adhesive can be further reduced. By setting the temperature of the hot water to 98°C or lower, the hot water certainly exists as a liquid, and accordingly, the used sanitary product can more reliably absorb the hot water. Due to the expansion of the absorbent body and the heat of the hot water, it is possible to more reliably generate a state in which the surface of the used sanitary product is likely to burst and a state in which the bonding force of the adhesive is reduced. For temperature measurement, a temperature of hot water in which the used sanitary product is immersed is measured, or a temperature of an inner part of 5 mm from the surface of the used sanitary product which has absorbed water to an amount close to the maximum absorption amount (tip of a temperature sensor is inserted) is measured.

In addition, the sterilization of constituent materials is extremely important in the reuse of the used sanitary product. It is preferable that the temperature of the hot water is 70°C or higher, because it is possible to exhibit an effect of sterilizing (disinfecting) the used sanitary product.

The treatment time in the pretreatment step S11, that is, the time for immersing the used sanitary product in hot water is not particularly limited as long as the absorbent body of the used sanitary product can expand, and is, for example, 2 to 60 minutes and preferably 4 to 30 minutes. In a case where the time is extremely short, the absorbent body cannot expand sufficiently, and in a case where the time is extremely long, the time is wasted and the treatment cost increases unnecessarily.

The amount of hot water absorbed by the absorbent body in the pretreatment step S11 is not particularly limited as long as the absorbent body can expand to the extent that the used sanitary product can be decomposed in the decomposition step which will be described later, and is, for example, 80 mass% or more of the maximum absorption amount of the used sanitary product and is preferably 90 mass% or more. Due to that, the used sanitary product can be fully expanded with water. As a result, an extremely high internal pressure can be generated in the absorbent body of the used sanitary product.

It should be noted that the maximum absorption amount is measured by the following procedure.
(1) An unused sanitary product is dried in an atmosphere at 100°C or higher, and the mass of the sanitary product is measured.
(2) In a case where a stretchable material (for example, a stretchable member around the legs, around the waist, or the like) that can form a pocket that makes it difficult for water to reach the absorbent body is arranged in the sanitary product, a cut is made in the stretchable member to flatten the sanitary product.
(3) The sanitary product is immersed in a water bath filled with sufficient tap water with the liquid-permeable sheet facing down, and left for 30 minutes.
(4) After leaving, the sanitary product is placed on a net with the liquid-permeable sheet facing down and drained for 20 minutes, and then the mass of the sanitary product is measured. Then, a mass difference before and after the immersion in tap water is defined as the maximum absorption amount.

Next, in the decomposition step S12, a physical impact is applied to the plurality of used sanitary products unfolded and swollen by the pretreatment step S11 to decompose the plurality of used sanitary product into a film (liquid-impermeable sheet), a nonwoven fabric (liquid-permeable sheet), and a core wrap, and an absorbent core (for example, an absorbent body and a super absorbent polymer).

The used sanitary product is unfolded and flat by the pretreatment step S11, and any portion of the surface is likely to burst due to expansion. In the present embodiment, the bonding force of the adhesive is particularly reduced due to the heat of hot water. Accordingly, in the decomposition step S12, by applying a physical impact to the used sanitary product in that state, among any portion of the surface, a joining portion between the liquid-permeable sheet (nonwoven fabric) and the liquid-impermeable sheet (film), where the bonding force is particularly reduced, burst. Due to that, the joining portion can be torn (peeled). The physical impact is not particularly limited, and for example, a method of throwing the used sanitary product on a surface made of a material harder than the used sanitary product, a method of causing the used sanitary product to be sandwiched and pass between a pair of rolls arranged to face each other and pressing the used sanitary product from both sides, and the like.

In the present embodiment, the decomposition step S12 includes a step of putting the plurality of swollen used sanitary products into a bottom portion of a rotating drum having a horizontal rotating shaft, and a step of rotating the rotating drum around the rotating shaft, pulling the plurality of used sanitary products to the upper part of the rotating drum and throwing them to the bottom portion. Due to that, a physical impact can be stably, continuously (consecutively), and easily applied to the plurality of used sanitary products. As the rotating drum, a rotating drum of a washing tub of a horizontal washing machine is used, for example, and accordingly, the decomposition step S12 can be carried out using a horizontal washing machine of the related art (for example, ECO-22B manufactured by Inamoto Manufacturing Co., Ltd.). A size of the rotating drum is not particularly limited as long as the impact described above can be realized, and an inner diameter and a depth are, for example, 50 to 150 cm and 30 to 120 cm. A rotation speed of the rotating drum is not particularly limited as long as the impact described above can be realized, and is, for example, 30 times/min to 100 times/min.

In addition, a temperature of the used sanitary product is kept relatively high by the hot water absorbed in the used sanitary product, but from a viewpoint of suppressing a temperature drop of the adhesive and maintaining the sterilizing effect, the temperature of the atmosphere in the rotating drum is preferably 70°C or higher and more preferably 75°C or higher. The temperature in the rotating drum is preferably 98°C or lower and more preferably 90°C or lower, from a viewpoint of handling the used sanitary product. It is preferable that the amount of water in the rotating drum is as small as possible, and that the amount of used sanitary product at least at the bottom portion is so small that it does not fall below the water surface. In a case where the used sanitary product is below the water surface, the impact on the used sanitary product is absorbed by the water, and it is difficult to apply the desired impact to the used sanitary product. The time for rotating the rotating drum is not particularly limited as long as the liquid-permeable sheet, the liquid-impermeable sheet, the core wrap, and the like and the absorbent core can be decomposed, and is, for example, 2 to 40 minutes and preferably 4 to 20 minutes.

In used sanitary product, the joining portion between the liquid-permeable sheet (nonwoven fabric) and the liquid-impermeable sheet (film) burst and torn off by the physical impact. At the same time, through a crevice, the internal pressure of the absorbent body causes the absorbent core (for example, pulp fiber and super absorbent polymer) in the used sanitary product to spurt out (burst out). Accordingly, the used sanitary product can be more reliably decomposed into the liquid-permeable sheet (nonwoven fabric), the liquid-impermeable sheet (film), and the core wrap, and the absorbent core (for example, pulp fiber-containing material containing pulp fiber and super absorbent polymer).

Next, in the separation step S13, the plurality of films (liquid-impermeable sheets), the plurality of nonwoven fabrics (liquid-permeable sheets), the core wrap, and the like are separated from the absorbent core (for example, pulp fiber and super absorbent polymer). However, the nonwoven fabric may remain bonded to the film. The separation method is not particularly limited, and examples thereof include a method of using a sieve that allows the absorbent core to pass through without passing through the liquid-permeable sheet, the liquid-impermeable sheet, the core wrap, or the like.

In the present embodiment, the separation step S13 includes an inactivation step S31 of inactivating the super absorbent polymer with an aqueous solution containing an inactivating agent before separating the film, the nonwoven fabric, and the core wrap, from the absorbent core, and a first separation step S32 of separating the film and the nonwoven fabric from the pulp fiber, the inactivated super absorbent polymer, and a mixture containing wastewater discharged from the super absorbent polymer by the inactivation.

In the inactivation step S31, before the first separation step S32, the liquid-permeable sheet (nonwoven fabric), the liquid-impermeable sheet (film), and the absorbent body (pulp fiber and super absorbent polymer) are immersed in an aqueous solution containing an inactivating agent capable of inactivating the super absorbent polymer. Accordingly, the super absorbent polymer attached to the liquid-permeable sheet, the liquid-impermeable sheet, and the pulp fiber can be inactivated. As a result, the super absorbent polymer in a high viscosity state before the inactivation can be made into a super absorbent polymer in a low viscosity state by dehydration by the inactivation.

Here, the inactivating agent is not particularly limited, and examples thereof include an acid (for example, inorganic acid and organic acid), lime, calcium chloride, magnesium sulfate, magnesium chloride, aluminum sulfate, aluminum chloride, and the like. The acid is preferable because it does not leave ash content in the pulp fibers. In a case where the acid is used as the inactivating agent, the pH is preferably 2.5 or less and more preferably 1.3 to 2.4. In a case where the pH is extremely high, water absorption capacity of the super absorbent polymer cannot be sufficiently reduced. In addition, the sterilizing ability may be reduced. In a case where the pH is extremely low, there is a risk of equipment corrosion, and a large amount of alkaline chemicals are required for neutralization treatment during sewage treatment.

Examples of the inorganic acid include a sulfuric acid, a hydrochloric acid, and a nitric acid, and the sulfuric acid is preferable from a viewpoint of not containing chlorine and cost. Meanwhile, examples of the organic acid include a citric acid, a tartaric acid, a glycolic acid, a malic acid, a succinic acid, an acetic acid, and an ascorbic acid, and an acid capable of forming a complex with a metal ion contained in excrement, for example, a hydroxycarbonate-based organic acid such as a citric acid, a tartaric acid, and a gluconic acid are particularly preferable. Examples of metal ions contained in excrement include calcium ions. This is because the metal ions in the excrement can be trapped and removed by a chelating effect of the acid capable of forming a complex with the metal ions contained in the excrement. In addition, the citric acid can be expected to have a high dirt component removing effect due to its cleaning effect. Since the pH changes depending on the water temperature, the pH in the present disclosure refers to pH measured at an aqueous solution temperature of 20°C.

A treatment temperature of the inactivation step S31, that is, a temperature of the aqueous solution containing the inactivating agent is not particularly limited as long as the inactivating reaction proceeds. The treatment temperature may be room temperature or higher than room temperature, and is, for example 15 to 30°C. In addition, a treatment time of the inactivation step S31, that is, a time for immersing the liquid-permeable sheet, the liquid-impermeable sheet, and the absorbent body in the aqueous solution containing the inactivating agent is not particularly limited as long as the super absorbent polymer is inactivated and dehydrated, and is, for example, 2 to 60 minutes and preferably 5 to 30 minutes. In addition, an amount of the aqueous solution in the inactivation step S31, that is, an amount of the aqueous solution containing the inactivating agent is not particularly limited as long as the inactivating reaction proceeds. The amount of the aqueous solution is, for example, preferably 300 to 3,000 parts by mass, more preferably 500 to 2,500 parts by mass, and even more preferably 1,000 to 2,000 parts by mass with respect to 100 parts by mass of the used sanitary product.

In the first separation step S32, the liquid-permeable sheet (nonwoven fabric), the liquid-impermeable sheet (film), and the core wrap are separated from the pulp fiber, the inactivated super absorbent polymer, and the mixture containing the wastewater discharged from the super absorbent polymer due to the inactivation. However, the wastewater is wastewater containing water released from the super absorbent polymer by dehydration with the aqueous solution containing the inactivating agent in the inactivation step S31, that is, liquid derived from excrement and water derived from hot water.

In the first separation step S32, the method of separating the liquid-permeable sheet and the liquid-impermeable sheet from the pulp fiber, the super absorbent polymer, and the wastewater (pulp fiber-containing material) is not particularly limited. For example, a product produced by the inactivation step (the liquid-permeable sheet, the liquid-impermeable sheet, the pulp fiber, the super absorbent polymer, the wastewater, and the like) is discharged while passing through a screen having an opening of 5 to 100 mm, preferably an opening of 10 to 60 mm. Accordingly, the product can be separated by remaining the pulp fiber, the super absorbent polymer, and the wastewater in the sewage, and remaining the liquid-permeable sheet and the liquid-impermeable sheet on the screen. In addition, other large-shaped materials such as nonwoven fabric and the films, and the like, may remain on the screen. In particular, since the super absorbent polymer is in a high viscosity state before inactivation, it is not easy to separate the super absorbent polymer attached to the liquid-permeable sheet, the liquid-impermeable sheet, and the pulp fiber. However, after the inactivation, the super absorbent polymer has low viscosity due to dehydration. Therefore, the super absorbent polymer attached to the liquid-permeable sheet, the liquid-impermeable sheet, and the pulp fiber can be easily separated from the liquid-permeable sheet, the liquid-impermeable sheet, and the pulp fiber. Therefore, the constituent members of sanitary product can be efficiently separated and collected.

In the present embodiment, the separation step S13 may further include a second separation step S33 of removing the adhesive of the joining portion with a solvent that dissolves the adhesive of the joining portion between the film and the other members. In the present embodiment, the adhesive of each joining portion is removed with a solvent that dissolves the adhesive of each joining portion between the film, the nonwoven fabric, and the absorbent body.

In the second separation step S33, the adhesive of the joining portion between the film (liquid-impermeable sheet) and other members (nonwoven fabric of the liquid-permeable sheet, liquid-permeable sheet, absorbent body remaining on the surface of the liquid-impermeable sheet, and the like) is removed with the solvent. Due to that, the film and other members can be separated from each other while maintaining the same shape without breaking or the like. Therefore, the constituent members such as the film of sanitary product can be efficiently collected. In addition, since the film and other members can be separated without remaining the adhesive on the film, the film can be reused as a resin having high purity. Due to that, it is possible to suppress the adhesive from adversely affecting the film when it is reused. The same applies to the nonwoven fabric as well as the film.

The solvent used in the second separation step S33 is not particularly limited as long as it can dissolve the adhesive, and for example, a terpene containing at least one of terpene hydrocarbon, terpene aldehyde, and terpene ketone is used. In this step, an aqueous solution containing terpene is used, and a concentration of terpene in the aqueous solution is, for example, 0.05 mass% and more and 2 mass% or less. It is preferably 0.075 to 1 mass%. In a case where the concentration of terpene is extremely low, the adhesive of the joining portion may not be able to be dissolved. In a case where the concentration of terpene is extremely high, the cost may increase. In addition, the terpene not only dissolves an adhesive such as a hot-melt adhesive, but also has an oil dirt cleaning effect. Therefore, for example, in a case where the constituent members of the sanitary product such as the liquid-impermeable sheet has printing, the terpene can also decompose and remove the printing ink.

Examples of terpene hydrocarbon include myrcene, limonene, pinene, camphor, sabinene, phellandrene, paracimene, ocimene, terpinene, kalen, zingiberene, caryophyllene, bisabolene, and cedrene. Among these, limonene, pinene, terpinene, and kalen are preferable. In addition, examples of the terpene aldehyde include citronellal, citral, cyclocitral, safranal, phellandral, perillaldehyde, geranial, and neral. Examples of the terpene ketone include camphor and thujone. Among the terpenes, terpene hydrocarbon is preferable and limonene is particularly preferable. There are three types of limonene which are d-limonene, 1-limonene, and dipentene (dl-limonene), and any of them can be preferably used. Terpene can be used alone or used in combination of two or more types thereof.

A treatment temperature of the second separation step S33, that is, a temperature of the aqueous solution containing the solvent is not particularly limited as long as the dissolution of the adhesive proceeds and the used sanitary product are decomposed into constituent members. The treatment temperature may be room temperature or higher than room temperature, and is, for example 15 to 30°C. In addition, a treatment time of the second separation step S33, that is, a time for immersing the liquid-permeable sheet, the liquid-impermeable sheet, and the absorbent body in the aqueous solution containing the solvent is not particularly limited as long as the dissolution of the adhesive proceeds and the used sanitary product are decomposed into constituent members. The treatment time is, for example, 2 to 60 minutes and preferably 5 to 30 minutes. An amount of the aqueous solution of the second separation step S33, that is, an amount of the aqueous solution containing the solvent is not particularly limited as long as the dissolution of the adhesive proceeds and the used sanitary product are decomposed into constituent members. The amount of the aqueous solution is, for example, preferably 300 to 3,000 parts by mass and more preferably 500 to 2,500 parts by mass, with respect to 100 parts by mass of the used sanitary product. By the second separation step S33, the amount of the adhesive remaining on the film, the nonwoven fabric, the absorbent body, and the like can be set to 1 mass% or less with respect to the film, the nonwoven fabric, the absorbent body, and the like.

In the present embodiment, as another preferred embodiment, the second separation step S33 may be performed together with the inactivation step S31. That is, the adhesive attached to the liquid-permeable sheet, the liquid-impermeable sheet, and the pulp fiber may be dissolved while inactivating the super absorbent polymer attached to the liquid-permeable sheet, the liquid-impermeable sheet, and the pulp fiber. In this case, as the aqueous solution for immersing the liquid-permeable sheet, the liquid-impermeable sheet, the pulp fiber and the super absorbent polymer, an aqueous solution containing both the inactivating agent and the solvent is used. Accordingly, in the inactivation step S31, the liquid-impermeable sheet (film), the liquid-permeable sheet (nonwoven fabric), and the absorbent body (pulp fiber and super absorbent polymer) can be substantially separated in the aqueous solution. Then, in the subsequent first separation step, the liquid-impermeable sheet (film) and the liquid-permeable sheet (nonwoven fabric) can be separated from the absorbent body (pulp fiber and super absorbent polymer), and the second separation step S33 can be omitted. In this case, the liquid-impermeable sheet (film) and the liquid-permeable sheet (nonwoven fabric) are substantially separated by removing the adhesive.

In the present embodiment, the separation step S13 may further include a first drying step S34 for drying the film with atmosphere or hot air at a temperature higher than room temperature to remove the solvent, after the step of removing the adhesive of the joining portion. In the present embodiment, the nonwoven fabric is also dried in this step.

The sterilization is extremely important in the reuse of the used sanitary product. In the first drying step S34, a step of drying the separated film (liquid-impermeable sheet) and nonwoven fabric (liquid-permeable sheet) in the atmosphere at high temperature or hot air is performed. A drying temperature is, for example, 105°C to 210°C and preferably 110°C to 190°C. A drying time depends on the drying temperature, and is, for example, 10 to 120 minutes and preferably 15 to 100 minutes. Due to that, not only the solvent remaining on the surface of the film and the nonwoven fabric is evaporated and removed, but also the film and the nonwoven fabric can be sterilized by the atmosphere or hot air at high temperature. Due to that, it is possible to exhibit a sterilizing (disinfecting) effect while removing the solvent.

On the other hand, in the present embodiment, the separation step S13 may include a third separation step S35 of separating the pulp fibers from the separated mixture. In the third separation step S35, the method of separating the pulp fiber from the separated mixture (including the pulp fiber, the super absorbent polymer, and the wastewater) is not particularly limited, and for example, the separated mixture is discharged while passing through a screen having an opening of 0.1 to 4 mm, preferably an opening of 0.15 to 2 mm. Accordingly, the pulp fiber can be separated from the mixture by remaining the super absorbent polymer and the wastewater in the sewage and remaining the pulp fiber (super absorbent polymer remains mainly on surface) on the screen. These pulp fibers contain a large amount of impurities, and they can be reused in this state depending on the purpose. The super absorbent polymer is attached to the separated pulp fiber, and the separated pulp fiber and the super absorbent polymer attached to the pulp fiber are mixed with water at a predetermined ratio, to obtain a pulp fiber-containing material, and the process proceeds to an ozone treatment step S36.

In the present embodiment, the separation step S13 includes the ozone treatment step S36 of treating the pulp fiber-containing material containing the super absorbent polymer, the pulp fiber, the coupling structure thereof, and water with an aqueous solution containing ozone, reducing a molecular weight of the super absorbent polymer attached to the pulp fiber for solubilization and removal.

In the used sanitary product, in an absorbent body containing the pulp fiber and the super absorbent polymer, (i) the super absorbent polymer enlarges as it absorbs a liquid such as a bodily fluid and entrains the pulp fiber, (ii) the enlarged super absorbent polymers generate gel blocking while entraining the pulp fiber, and accordingly, the plurality of super absorbent polymers and the plurality of pulp fibers may form a coupling structure. The pulp fiber-containing material includes, in addition to the free pulp fiber and the free super absorbent polymer, a coupling structure configured with a plurality of super absorbent polymers and a plurality of pulp fibers.

In the ozone treatment step S36, the super absorbent polymer contained in the pulp fiber-containing material (treatment liquid) is oxidatively decomposed by ozone in the aqueous solution and solubilized in the aqueous solution to be removed. The state in which the super absorbent polymer is oxidatively decomposed and solubilized in the aqueous solution refers to a state in which the super absorbent polymer and the coupling structure pass through a 2 mm screen. Accordingly, impurities such as the super absorbent polymer can be removed from the pulp fiber-containing material (treatment liquid) to produce a high-purity pulp fiber. In addition, secondary sterilization, bleaching, and deodorization of pulp fibers can be performed by the ozone treatment.

FIG. 2 is a schematic view showing an example of a configuration of an apparatus 2 which executes the ozone treatment step S36. The apparatus 2 includes a pulp fiber-containing material storage unit 3 which stores a pulp fiber-containing material 51 containing water, the pulp fiber separated in the third separation step S35, and the super absorbent polymer, and an ozone treatment unit 4 which removes the super absorbent polymer contained in the pulp fiber-containing material 51 from the pulp fiber by oxidative decomposition.

The pulp fibers-containing material storage unit 3 includes pulp fibers-containing material tank 12 and a stirrer 13. The pulp fibers-containing material tank 12 stores the pulp fibers-containing material 51 supplied via a pipe 61. The stirrer 13 stirs the pulp fiber-containing material 51 in the pulp fiber-containing material tank 12 so that the pulp fiber and the super absorbent polymer in the pulp fiber-containing material 51 are not separated from water and not precipitated to a lower portion of the pulp fiber-containing material 51.

Meanwhile, the ozone treatment unit 4 includes a supply pump 21, a treatment tank 31, an ozone supply device 41, a delivery pump 22, and an ozone decomposition device 34. The treatment tank 31 contains an acidic aqueous solution as a treatment liquid 52. The treatment tank 31 includes pulp fibers-containing material supply port 32, a treatment liquid discharge port 33, and an ozone-containing gas supply port 43. The pulp fibers-containing material supply port 32 is arranged on an upper part of the treatment tank 31 and supplies the pulp fibers-containing material 51 to the treatment tank 31. The treatment liquid discharge port 33 is arranged on a lower part of the treatment tank 31 and discharges the treatment liquid 52. The ozone-containing gas supply port 43 is arranged on a lower part of the treatment tank 31, specifically, on an upper part of the treatment liquid discharge port 33, and delivers the ozone-containing gas 53 into the treatment tank 31.

Specifically, the supply pump 21 continuously supplies the pulp fibers-containing material 51 of the pulp fibers-containing material tank 12 into the treatment tank 31 from the pulp fibers-containing material supply port 32 at a first flow rate via the pipe 62. The ozone supply device 41 supplies the ozone-containing gas 53 to the treatment tank 31. Examples of an ozone generation device 42 of the ozone supply device 41 include an ozone water exposure tester ED-OWX-2 manufactured by Ecodesign Co., Ltd., an ozone generation device OS-25V manufactured by Mitsubishi Electric Corporation, and the like. The ozone-containing gas 53 is another type of gas containing ozone, and examples thereof include an oxygen gas containing ozone. The ozone-containing gas supply port 43 delivers the ozone-containing gas 53 supplied to the treatment tank 31 via the pipe 65 into the treatment tank 31, and is arranged on a lower part (preferably the bottom portion) of the treatment tank 31. The ozone-containing gas supply port 43 continuously supplies the ozone-containing gas 53 as a plurality of fine bubbles into the treatment liquid 52 from a lower part to an upper part of the treatment liquid 52 (treatment tank 31). The delivery pump 22 continuously discharges the treatment liquid 52 in the treatment tank 31 from the treatment liquid discharge port 33 to the outside of the treatment tank 31 at a second flow rate via the pipe 63. The ozone decomposition device 34 receives the ozone-containing gas 53 accumulated in the upper part of the treatment tank 31 via the pipe 64, and detoxifies and release the ozone to the outside. In addition, the treatment liquid 52 in the treatment tank 31 is only the treatment liquid 52 before the start of the ozone treatment step S36, and is a liquid obtained by mixing the treatment liquid 52 and the pulp fibers-containing material 51 after the start thereof. In the present embodiment, the liquid in the treatment tank 31 including the liquid obtained by mixing the treatment liquid 52 and the pulp fibers-containing material 51 is defined as the treatment liquid 52.

Next, a specific method of the ozone treatment step S36 will be described. The pulp fiber and the super absorbent polymer separated in the third separation step S35 are mixed with water so as to have a preset concentration to obtain the pulp fiber-containing material 51. The concentration of the pulp fibers in the pulp fibers-containing material 51 is set to be the preset concentration in a state in which it is put to the treatment tank 31 and mixed with the treatment liquid 52. The pulp fibers-containing material 51 is supplied to and stored in the pulp fibers-containing material tank 12 via a pipe 61. Since the specific gravity of the pulp fiber and the super absorbent polymer is greater than 1, the pulp fiber-containing material 51 is stirred with the stirrer 13 in the pulp fiber-containing material tank 12 so that the pulp fiber and the super absorbent polymer do not separate from water.

The flow rate of the pulp fibers-containing material 51 in the pulp fibers-containing material tank 12 is controlled by the supply pump 21, and the pulp fibers-containing material 51 is continuously supplied from the pulp fibers-containing material supply port 32 to the treatment tank 31 via the pipe 62 at the first flow rate. The treatment liquid 52 is an acidic aqueous solution and has a specific gravity of approximately 1. Therefore, the pulp fiber and the super absorbent polymer are precipitated from the upper part to the lower part of the treatment liquid 52.

Meanwhile, the ozone-containing gas 53 generated by the ozone generation device 42 is supplied to the treatment tank 31 via the pipe 65 and released in a state of fine bubbles (for example, microbubbles or nanobubbles) into the treatment liquid 52 from the ozone-containing gas supply port 43 of the treatment tank 31. That is, the ozone-containing gas 53 rises from the lower part to the upper part of the treatment liquid 52.

Then, in the treatment liquid 52, the pulp fiber and the super absorbent polymer which move downward, that is, fall, and the ozone-containing gas 53 which moves upward, that is, rises, proceed to oppose each other and collide with each other. The ozone-containing gas 53 is attached to the surfaces of the pulp fiber, the super absorbent polymer, and the coupling structure. The ozone in the ozone-containing gas 53 oxidatively decomposes the free super absorbent polymer and dissolves it in the treatment liquid 52. Accordingly, the super absorbent polymer on the pulp fiber is removed from the pulp fiber. The pulp fibers fall to the bottom portion of the treatment tank 31, and the ozone-containing gas 53 is released to a space on the upper part of the treatment tank 31.

In the free super absorbent polymer, the free pulp fiber, and the coupling structure, the free super absorbent polymers and coupling structure containing the super absorbent polymer having a relatively low buoyancy tends to have higher sedimentation properties than the free pulp fiber having a relatively high buoyancy. Meanwhile, the ozone-containing gas rises while consuming ozone and treating the super absorbent polymer and the pulp fiber, and accordingly, the ozone-containing gas existing at the lower position has a higher ozone content than the ozone-containing gas existing at an upper position (that is, it tends to be fresh).

Accordingly, the free super absorbent polymer and the coupling structure which move downward relatively quickly, can be accurately oxidatively decomposed with the fresher ozone-containing gas to form free pulp fiber. Meanwhile, since the free pulp fiber moves downward relatively slowly, the ozone-containing gas can treat the free pulp fiber by taking time. Specifically, ozone in the ozone-containing gas collides with the pulp fibers while facing each other, so that hemicellulose, lignin, and the like of the pulp fibers can be decomposed.

After that, the treatment liquid 52 (including ozone-treated pulp fiber) on the bottom portion of the treatment tank 31 is continuously discharged to outside of the treatment tank 31 from the treatment liquid discharge port 33 of the treatment tank 31 via the pipe 63 at the second flow rate, by controlling the flow rate of the delivery pump 22. The ozone of the ozone-containing gas 53 accumulated on the upper part of the treatment tank 31 is detoxified by the ozone decomposition device 34 and released to the outside.

As described above, the pulp fibers-containing material 51 is continuously supplied into the treatment tank 31 from the upper part of the treatment tank 31 at the first flow rate, and the treatment liquid 52 is continuously discharged from the lower part (bottom portion) of the treatment tank 31 to the outside of the treatment tank 31 at the second flow rate. Due to that, a continuous and stable flow of fluid (including pulp fibers) from the upper part to the lower part can be forcibly generated in the treatment tank 31.

The treatment liquid 52 discharged from the treatment tank 31 contains the ozone-treated pulp fiber, from which the super absorbent polymer, hemicellulose, lignin, and the like have been removed, and contains a low molecular weight organic material generated by oxidative decomposition of the super absorbent polymer. The ozone-treated pulp fiber is collected in a step at the downstream side of the delivery pump 22, for example, in a fourth separation step S37 which will be described later.

In this method, at least the pulp fiber-containing material 51 containing the pulp fiber and the super absorbent polymer is continuously supplied into the treatment tank 31 containing the treatment liquid 52 capable of dissolving the super absorbent polymer at the first flow rate, and the treatment liquid 52 containing the ozone-treated pulp fiber, from which the super absorbent polymer has been removed, and containing a low molecular weight organic material generated by the oxidative decomposition of the super absorbent polymer is continuously discharged to outside of the treatment tank 31 at the second flow rate. With the configuration described above, a continuous and stable flow of fluid (including pulp fibers) can be forcibly generated from the pulp fibers-containing material supply port 32 for supplying the pulp fibers-containing material 51 in the treatment tank 31 toward the treatment liquid discharge port 33 for discharging the treatment liquid 52. With the flow of the fluid, that is, a water flow, the super absorbent polymer can be treated (solubilized) and the pulp fiber can be treated, even in a case where an amount of treatment of the pulp fiber and the super absorbent polymer is increased.

Here, it is preferable that the first flow rate and the second flow rate are the same. By setting the first flow rate and the second flow rate to be the same, the amount of the treatment liquid 52 in the treatment tank 31 can be maintained constant, and stable and continuous treatment can be realized. However, in a case where the amount of the treatment liquid 52 in the treatment tank 31 can be maintained substantially constant, that is, unless the amount of the treatment liquid 52 in the treatment tank 31 is significantly increased or decreased, the first flow rate and the second flow rate may fluctuate over time. That is, the first flow rate and the second flow rate do not have to be completely the same at all times, and may be substantially the same on average over time. Here, the expression, substantially the same means that a difference between the first flow rate and the second flow rate is within 5 mass%. In this case as well, stable and continuous treatment can be realized.

In a case where the ozone-containing gas 53 is supplied to the treatment liquid 52, an ozone concentration in the treatment liquid 52 is not particularly limited as long as it can oxidatively decompose the super absorbent polymer, and is, for example, 1 to 50 mass ppm, preferably 2 to 40 mass ppm, and more preferably 3 to 30 mass ppm. In a case where the ozone concentration in the treatment liquid 52 is extremely low, the super absorbent polymer cannot be completely solubilized, and the super absorbent polymer may remain in the pulp fiber. On the other hand, in a case where the ozone concentration in the treatment liquid 52 is extremely high, an oxidizing power is also increased, which may damage the pulp fibers and may cause a problem in safety. An ozone treatment temperature is not particularly limited as long as it can oxidatively decompose the super absorbent polymer, and may be kept at room temperature or may be higher than room temperature, for example.

The concentration of ozone in the treatment liquid 52 (aqueous solution) is measured by the following method.
(1) In a 100 mL graduated cylinder containing approximately 0.15 g of potassium iodide and 5 mL of a 10% citric acid solution, 85 mL of the treatment liquid 52 in which ozone is dissolved is put and reacted.
(2) The treatment liquid 52 after the reaction is moved to a 200 mL Erlenmeyer flask, a starch solution is added into the Erlenmeyer flask, the mixture is colored in purple, and then titrated while stirring until it turns to be colorless with 0.01 mol/L sodium thiosulfate, and the added amount a (mL) is recorded.
(3) The concentration of ozone in the aqueous solution is calculated using the following equation. The concentration of ozone in the aqueous solution (mass ppm) is calculated by the following equation: concentration of ozone in the aqueous solution (mass ppm) = a (mL) × 0.24 × 0.85 (mL).

The ozone concentration in the ozone-containing gas 53 is preferably 40 to 200 g/m³, more preferably 80 to 200 g/m³, and even more preferably 100 to 200 g/m³. In a case where the ozone concentration in the ozone-containing gas 53 is extremely low, the super absorbent polymer cannot be completely solubilized, and the super absorbent polymer may remain. In a case where the concentration in the ozone-containing gas 53 is extremely high, it may cause damage to pulp fibers, a deterioration in safety, and an increase in production cost. The ozone concentration in the ozone-containing gas 53 can be measured by, for example, an ultraviolet absorption type ozone concentration meter (for example, manufactured by Ecodesign Co., Ltd.: ozone monitor OZM-5000G).

The concentration of the pulp fiber-containing material (for example, pulp fiber and super absorbent polymer) in the treatment liquid 52 is not particularly limited as long as it is a concentration at which the super absorbent polymer can be oxidatively decomposed by ozone in the treatment liquid 52 and is, for example, 0.1 to 20 mass%, preferably 0.2 to 10 mass%, and more preferably 0.3 to 5 mass%. In a case where the concentration of the pulp fiber is extremely high, there is a risk that the super absorbent polymer cannot be completely solubilized, and the super absorbent polymer may remain in the pulp fiber. On the other hand, in a case where the concentration of the pulp fibers is extremely low, an oxidizing power is also increased, which may damage the pulp fibers and may cause a problem in safety. The concentrations of the pulp fiber and the super absorbent polymer in the pulp fiber-containing material 51 are suitably set based on the concentrations of the pulp fiber and the super absorbent polymer in the treatment liquid 52 and the amount of the treatment liquid 52.

In a case where the ozone is supplied to the treatment liquid 52 containing the pulp fiber and the super absorbent polymer, the treatment liquid 52 is preferably acidic (specifically, pH of more than 0.0 and pH of less than 3.0, preferably pH of 2.5 or more and pH of less than 3.0), weakly acidic (specifically, pH of 3.0 or more and pH of less than 6.0), or neutral (specifically, pH of 6.0 or more and pH of 8.0 or less, preferably pH of 6.0 or more and pH of 7.0 or less). The pH of the treatment liquid 52 is more preferably more than 0.0 and 7.0 or less, and even more preferably 2.5 to 6.0. By treating in an acidic state, the deactivation of ozone is suppressed, the oxidative decomposition effect of the super absorbent polymer by ozone is enhanced, and the super absorbent polymer can be oxidatively decomposed in a short time. In order to maintain the pH of the treatment liquid, the pH of the pulp fibers-containing material 51 may be set to be the same as the pH of the treatment liquid 52, and the pulp fibers-containing material 51 may be supplied to the treatment tank 31. Alternatively, the pH of the treatment liquid 52 may be monitored with a pH sensor, and in a case where the pH fluctuates to the neutral side, a predetermined acidic solution may be added to the treatment liquid 52 by an amount corresponding to a fluctuation range.

The amount of the treatment liquid 52 (including the pulp fiber-containing material 51) in the treatment tank 31 is not particularly limited as long as the super absorbent polymer can be oxidatively decomposed, and it is preferable that a volume V (unit: L) of the treatment liquid 52 in the treatment tank 31 and a mass W (unit: kg) of the pulp fiber satisfy 30 ≦ V/W ≦ 1000. These more preferably satisfy 50 ≦ V/W ≦ 400, and even more preferably satisfy 100 ≦ V/W ≦ 200. In a case where the V/W is extremely small, there is a risk that the super absorbent polymer cannot be completely solubilized, and the super absorbent polymer remains. In a case where the V/W is extremely large, there is a risk that the production cost increases. The volume V of the treatment tank 31 is not particularly limited, and is, for example, 50 to 80 L.

A flow rate RO (Unit: L/min) of the ozone-containing gas and the volume V (unit: L) of the treatment liquid 52 in treatment tank 31 preferably satisfy 0.01 ≦ RO /V ≦ 1.25. These more preferably satisfy 0.03 ≦ RO/V ≦ 1.0 and even more preferably satisfy 0.06 ≦ RO/V ≦ 0.75. In a case where RO/V is extremely small, there is a risk that the super absorbent polymer cannot be completely solubilized, and the super absorbent polymer may remain in the pulp fiber. In a case where RO/V is extremely large, there is a risk of damage to pulp fiber, a deterioration in safety, and an increase in production cost. The flow rate RO of the ozone-containing gas is not particularly limited, and is, for example, 3 to 6L/min.

The time during which the pulp fiber-containing material is present in the treatment tank 31, that is, the time during which the pulp fiber-containing material is treated in the treatment liquid 52 (hereinafter, also referred to as "in-tank treatment time") changes depending on the purpose such as the decomposition of the hemicellulose in the pulp fiber, decomposition of lignin, and oxidative decomposition of super absorbent polymer, and is not particularly limited. The in-tank treatment time may be short, in a case where the ozone concentration of the treatment liquid 52 is high, and may be long, in a case where the ozone concentration of the treatment liquid 52 is low. The in-tank treatment time is, for example, 15 minutes to 180 minutes and preferably 30 minutes to 60 minutes.

The ozone-containing gas and the pulp fiber-containing material can be brought into contact with each other based on the CT value, which is the product of the ozone concentration (mass ppm) in the ozone-containing gas and the in-tank treatment time (minutes). The CT value is preferably 100 ppm · min or more, more preferably 1,000 ppm · min or more, even more preferably 2,000 ppm · min or more, still more preferably 4,000 ppm · min or more, still even more preferably 5,000 ppm. · min or more, and still further more preferably 6,000 ppm · min or more.

The CT value is preferably 12,000 ppm · min or less, more preferably 11,000 ppm · min or less, even more preferably 10,000 ppm · min or less, and still more preferably 9,000 ppm · min or less. In a case where the CT value is extremely small, the decomposition of hemicellulose, the decomposition of lignin, the decomposition of super absorbent polymer, and particularly the decomposition of hemicellulose may be insufficient. In a case where the CT value is extremely large, it may cause damage to pulp fibers, a deterioration in safety, and an increase in production cost.

The method of measuring the concentration of ozone of the CT value in the ozone-containing gas is as described above. In addition, the in-tank treatment time of the CT value means the time (min) for supplying the ozone-containing gas, in the case of a so-called batch type. In a case of a so-called continuous type, the in-tank treatment time means a value obtained by dividing the volume (L) of the treatment liquid in the treatment tank by a discharge amount (L/min) per hour.

In the present disclosure, in the ozone treatment step, the ozone-treated pulp fiber has a hemicellulose content of preferably 10.0 mass% or less, more preferably 9.0 mass% or less, even more preferably 8.0 mass% or less, and still more preferably 6.0 mass% or less, still even more preferably 5.0 mass% or less, and still further more preferably 4.0 mass% or less. As a result, the pulp fiber raw material is easily formed in the next alkali treatment step. A lower limit of the hemicellulose content is 0.0 mass%.

While the pulp fiber is present in the treatment tank 31, the super absorbent polymer is oxidatively decomposed into low molecular weight components by ozone and dissolved in the treatment liquid 52. In addition, hemicellulose in the pulp fiber is decomposed by the ozone, and a part thereof is dissolved in the treatment liquid 52. In addition, lignin in the pulp fiber is decomposed by the ozone and dissolved in the treatment liquid 52. The low molecular weight component of the super absorbent polymer, the decomposition product of hemicellulose, the decomposition product of lignin, and the like dissolved in the treatment liquid 52 are discharged together with the treatment liquid 52. In addition, in this step, the used sanitary product is primarily disinfected by the sterilization action of the ozone. As described above, the ozone-treated pulp fiber is formed.

The production method of the present disclosure includes the following steps.
- Ozone treatment step of forming an ozone-treated pulp fiber from the pulp fiber to be treated by supplying an ozone-containing gas to a treatment tank containing a treatment liquid containing a pulp fiber-containing material containing the pulp fiber to be treated
- Alkali treatment step of treating the ozone-treated pulp fiber with an alkaline aqueous solution and forming a pulp fiber raw material having a hemicellulose content of less than 8.0 mass%

The ozone treatment step is not particularly limited, as long as the predetermined ozone-treated pulp fiber is formed from the pulp fiber by supplying the ozone-containing gas to the treatment tank containing the treatment liquid containing the pulp fiber-containing material containing the pulp fiber to be treated, and can be performed by, for example, a so-called batch type, continuous type or the like.

In a case where the pulp fiber to be treated is an unused pulp fiber, the pulp fiber-containing material can be an unused pulp fiber single body. In a case where the pulp fiber to be treated is a used pulp fiber, for example, a pulp fiber derived from a used sanitary product, the pulp fiber-containing material contains at least the pulp fiber, and may be even the pulp fiber single body. In addition, the pulp fiber-containing material can contain the super absorbent polymer in addition to the pulp fiber, and may contain a coupling structure in which a plurality of super absorbent polymers and a plurality of pulp fibers are coupled, and materials (for example, core wrap, liquid-permeable sheet, liquid-impermeable sheet, and the like) configuring the sanitary product. The ozone-containing gas may be supplied into the treatment liquid in the treatment tank, or may be supplied to the space on the treatment liquid in the treatment tank. The alkali treatment step will be described later.

The production method of the present disclosure can include a preparation step, a pulp fiber-containing material supply step, an ozone-containing gas supply step, an ozone treatment step, and a treatment liquid discharge step described below.
- A preparation step of preparing the treatment tank comprising a pulp fiber-containing material supply port, a treatment liquid discharge port, and an ozone-containing gas supply port arranged at a lower position of the treatment tank
- A pulp fiber-containing material supply step of supplying the pulp fiber-containing material to the treatment tank from the pulp fiber-containing material supply port
- An ozone-containing gas supply step of supplying the ozone-containing gas to the treatment liquid in the treatment tank from the ozone-containing gas supply port
- The ozone treatment step of forming the ozone-treated pulp fiber from the pulp fiber to be treated, by bringing the pulp fiber-containing material into contact with the ozone-containing gas while raising the ozone-containing gas in the treatment tank
- A treatment liquid discharge step of discharging the treatment liquid containing the ozone-treated pulp fiber from the treatment liquid discharge port.

The treatment liquid discharge port is arranged on a lower side of the pulp fiber-containing material supply port, and in the ozone treatment step, the pulp fiber-containing material may be brought into contact with the ozone-containing gas while the pulp fiber-containing material is lowered. In addition, the treatment liquid discharge port is arranged on an upper side of the pulp fiber-containing material supply port, and in the ozone treatment step, the pulp fiber-containing material may be brought into contact with the ozone-containing gas while raising the pulp fiber-containing material.

In the present embodiment, as one of the aspects, the ozone treatment step S36 (continuous treatment step) includes a step of continuously discharging the treatment liquid 52 from the lower part of the treatment tank 31 while continuously supplying the pulp fiber-containing material 51 from the upper part of the treatment tank 31. The pulp fiber and the super absorbent polymer in the pulp fiber-containing material 51 have low buoyancy, and the pulp fiber, the super absorbent polymer, and the coupling structure are naturally precipitated.

In the present embodiment, as one of the aspects, the treatment liquid 52 capable of dissolving the super absorbent polymer is an aqueous solution containing an ozone-containing gas that oxidatively decomposes the super absorbent polymer so as to be soluble. The ozone treatment step S36 (continuous treatment step) further includes a delivery step of continuously delivering a plurality of bubbles of the ozone-containing gas from the lower part to the upper part of the treatment liquid 52. In one of such aspects of the method, in the treatment liquid 52, the ozone-containing gas rises, and the pulp fiber and the super absorbent polymer fall, that is, have countercurrent. Accordingly, a contact probability between the pulp fiber and the super absorbent polymer, and the ozone-containing gas can be increased. In addition, the deeper the pulp fiber and super absorbent polymer are precipitated, the higher the concentration of ozone-containing gas can be contacted. Therefore, the super absorbent polymer, hemicellulose, lignin, and the like, which could not be completely dissolved in the treatment liquid 52 only by the ozone-containing gas coming into contact with a shallow part of the treatment liquid 52, can come into contact with the high-concentration ozone-containing gas in the treatment liquid 52 in the deep part. As a result, the super absorbent polymer, hemicellulose, lignin, and the like can be decomposed, dissolved in the treatment liquid 52, and removed from the pulp fiber.

In the present embodiment, as one of the aspects, the delivery step described above includes a step of delivering the ozone-containing gas in a state of microbubbles or nanobubbles. However, the microbubbles are bubbles having a diameter of approximately 1 to 1,000 µm and preferably approximately 10 to 500 µm, and the nanobubbles are bubbles having a diameter of approximately 100 to 1000 nm, preferably approximately 100 to 500 nm. The microbubbles or nanobubbles are fine bubbles as described above, have properties of a large surface area per unit volume, and a slow speed of rise in the liquid. Therefore, in this method, as one of the aspects, the ozone-containing gas containing the fine bubbles described above is sent from the lower part to the upper part of the treatment liquid 52 in the treatment tank 31.

Since the fine bubbles occupy a small area on the surface of the pulp fiber, more bubbles can come into contact with the surface of the pulp fiber. Accordingly, the pulp fiber, the super absorbent polymer, and the coupling structure can be evenly wrapped with fine bubbles, and a contact area between them and the ozone-containing gas can be further increased. In addition, in a case where the pulp fiber-containing material falls in the ozone treatment step, more bubbles come into contact with the surface of the pulp fibers, and accordingly, the sedimentation properties of the pulp fiber, the super absorbent polymer, and the coupling structure can be decreased by the buoyancy of the bubbles, and the contact time between them and the ozone-containing gas can be increased. As a result, the super absorbent polymer, hemicellulose, lignin, and the like can be decomposed, dissolved in the treatment liquid 52, and removed from the pulp fiber.

In the present embodiment, as one of the aspects, the treatment liquid 52 is an acidic aqueous solution and is, for example, an acidic aqueous solution having a pH of 2.5 or less. In that case, even in a case where the super absorbent polymer in the pulp fiber-containing material 51 partially has a remaining water absorption capacity, the water absorption expansion of the super absorbent polymer can be suppressed. Accordingly, the super absorbent polymer can be dissolved in the treatment liquid 52 in a short time, and the super absorbent polymer can be removed more reliably. In particular, in a case where the treatment liquid 52 is an ozone-containing aqueous solution, the ozone in the ozone-containing aqueous solution is less likely to be deactivated, and accordingly, the super absorbent polymer can be oxidatively decomposed in a shorter time, and hemicellulose, lignin, and the like can be decomposed.

In addition, as another preferred embodiment, the configuration of the treatment tank 31 may have a configuration other than that shown in FIG. 2. FIG. 3 is a schematic view showing another configuration example of the apparatus 2 of the ozone treatment step of FIG. 1. The apparatus 2 of FIG. 3 is different from the apparatus 2 of FIG. 2, in that the pipe 63 of the ozone treatment unit 4 has a continuous U-shaped tube structure in which two U-shaped tubes are continuously connected upside down and the delivery pump 22 is omitted. In that case, in a case where the pipe 63 is filled with the treatment liquid 52 and a height of a liquid level of the treatment liquid 52 in the treatment tank 31 is higher than a height of a liquid level of the liquid in the tank of the next step connected by the pipe 63, the treatment liquid 52 is discharged to the tank in the next step via the pipe 63 according to the principle of siphon. Accordingly, in a case where the height of the liquid level of the treatment liquid 52 in the treatment tank 31 is set to be the same as the height of the liquid level of the liquid in the tank of the next step initially before the start of the treatment, when the pulp fibers-containing material 51 is continuously supplied into the treatment tank 31 at the first flow rate by the start of the treatment, the treatment liquid 52 is discharged to the tank in the next step via the pipe 63 at the second flow rate = the first flow rate according to the principle of siphon. However, regarding the height of the liquid level of the liquid in the tank in the next step, the height before the start of the treatment is maintained even during the treatment. In this case, the delivery pump 22 is not necessary, and the control of the second flow rate of the delivery pump 22 is not necessary.

In the present embodiment, the separation step S13 may further include a fourth separation step S37 of separating the ozone-treated pulp fiber from the treatment liquid 52 discharged from the treatment tank 31, and a second drying step S38 of drying the separated ozone-treated pulp fiber.

In the fourth separation step S37, the method of separating the ozone-treated pulp fiber from the treatment liquid 52 discharged from the treatment tank 31 is not particularly limited, and for example, a method of causing the treatment liquid 52 containing the ozone-treated pulp fiber to pass a screen mesh having an opening of 0.15 to 2 mm is used. In a case where the treatment liquid 52 containing the ozone-treated pulp fiber is passed through a screen mesh having an opening of 0.15 to 2 mm, sewage containing an oxidative decomposition product of the super absorbent polymer, a decomposition product of hemicellulose, a decomposition product of lignin, and the like passes through the screen. In contrast, the ozone-treated pulp fiber remains on the screen.

In the subsequent second drying step S38, the separated ozone-treated pulp fiber is dried with an atmosphere at a high temperature or hot air. The drying temperature is, for example, 105°C to 210°C and preferably 110°C to 190°C. A drying time depends on the drying temperature, and is, for example, 10 to 120 minutes and preferably 15 to 100 minutes. Accordingly, the moisture remaining on the surface of the ozone-treated pulp fiber is evaporated and removed, and an ozone-treated pulp fiber having extremely low super absorbent polymer content and high purity can be collected. In addition, the ozone-treated pulp fiber can be sterilized (disinfected) in the atmosphere at a high temperature or hot air. When the next alkali treatment step S39 is performed without storing the ozone-treated pulp fiber, the second drying step S38 can be omitted.

In the alkali treatment step S39 as the alkali treatment step, the ozone-treated pulp fiber is treated with an alkaline aqueous solution to form a pulp fiber raw material having a hemicellulose content of less than 8.0 mass%. By subjecting the ozone-treated pulp fibers that have undergone the ozone treatment step to the alkali treatment step, hemicellulose can be decomposed under conditions milder than those of the conventionally known alkali treatment step. In addition, it is expected that the decomposition of cellulose can be suppressed by performing the alkali treatment step under mild conditions.

The conditions of the alkali treatment step are not particularly limited as long as they can form a pulp fiber raw material having a hemicellulose content of less than 8.0 mass%. The alkali treatment step can be carried out by immersing the ozone-treated pulp fiber in an alkaline aqueous solution having a normality of preferably 0.1 N or more, more preferably 0.2 N or more, and even more preferably 0.3 N or more. Further, the alkali treatment step can be carried out by immersing the ozone-treated pulp fiber in an alkaline aqueous solution having a normality of preferably 8.0N or less, more preferably 6.0N or less, even more preferably 5.0N or less, still more preferably 4.0N or less, and still further more preferably 3.0 N or less.

By setting the normality of the alkaline aqueous solution in the above range, the ozone-treated pulp fiber, the treatment equipment, and the like are less likely to be damaged, the waste liquid of the alkali treatment step is easily treated, and the danger when carrying out the alkali treatment step can be reduced. The normality of the alkaline aqueous solution includes a range lower than that in the method of forming cellulose nanofibers of the related art without ozone treatment.

The amount of the alkaline aqueous solution is not particularly limited as long as it can form a pulp fiber raw material having a hemicellulose content of less than 8.0 mass%, and preferably 10 to 200 L and more preferably 20 to 100 L of alkaline aqueous solution can be added per 1 kg (dry mass) of ozone-treated pulp fiber.

The temperature of the alkali treatment step is not particularly limited, and the alkali treatment step can be carried out at room temperature (25°C), for example. The alkali treatment step can be carried out at a temperature of preferably 10°C or higher, more preferably 15°C or higher, and even more preferably 20°C or higher. In addition, the alkali treatment step can be carried out at a temperature of preferably 80°C or lower, more preferably 60°C or lower, even more preferably 50°C or lower, and still more preferably 40°C or lower.

The time of the alkali treatment step is not particularly limited, and the alkali treatment step can be carried out for a period of time of preferably 5 to 240 minutes, more preferably 10 to 120 minutes, and even more preferably 15 to 60 minutes.

For example, in the alkali treatment step, when a high temperature condition of, for example, 40°C or higher is selected, a normality condition of, for example, 0.3 N to 4.5 N is selected as the concentration of the alkaline aqueous solution, and hemicellulose in the ozone-treated pulp fiber can be decomposed. In addition, in the alkali treatment step, the ozone-treated pulp fiber can be immersed in an alkaline aqueous solution, and the ozone-treated pulp fiber may be stirred together with the alkaline aqueous solution.

The alkaline aqueous solution can be formed by dissolving an alkali that exhibits alkalinity when dissolved in water, for example, hydroxides and salts of alkali metals and alkaline earth metals, in water. Examples of the alkali metal include lithium, sodium, potassium, and the like, and sodium is preferable. Examples of the alkaline earth metal include magnesium, calcium, barium, and the like. When the alkaline aqueous solution is an aqueous solution of sodium hydroxide, the concentration of the alkaline aqueous solution is, for example, 2 to 10 mass%.

In the alkali treatment step S39, the second drying step S38 may be omitted, and the undried (wet state) recycled pulp fibers obtained in the fourth separation step S37 may be subjected to the alkali treatment step S39. The fourth separation step S37 and the second drying step S38 can be omitted, and the treatment liquid 52 containing the recycled pulp fiber obtained in the ozone treatment step S36 can be subjected to the alkali treatment step S39.

After the alkali treatment step, a cleaning step for cleaning the decomposition products of alkali and hemicellulose can be performed. In addition, the drying step can be performed after the cleaning step. The drying step can be the same as the second drying step S38.

In the present disclosure, the pulp fiber raw material has a cellulose content of preferably 94.0 mass% or more, more preferably 95.0 mass% or more, even more preferably 96.0 mass% or more, and still more preferably 97.0 mass% or more. Accordingly, the pulp fiber raw material can be suitably used as a cellulose raw material for cellulose-derived products. An upper limit of the cellulose content is 100.0 mass%.

In the present disclosure, the pulp fiber raw material has a hemicellulose content of preferably less than 8.0 mass%, more preferably less than 6.0 mass%, even more preferably less than 5.0 mass%, still more preferably less than 4.0 mass%, and still even more preferably less than 3.0 mass%. Accordingly, the pulp fiber raw material can be suitably used as a cellulose raw material for cellulose-derived products. A lower limit of the hemicellulose content is 0.0 mass%.

In the present disclosure, the pulp fiber raw material, preferably the ozone-treated pulp fiber and the pulp fiber raw material have a lignin content of preferably 0.10 mass% or less, more preferably 0.08 mass% or less, and even more preferably 0.06 mass% or less. Accordingly, the pulp fiber raw material can be suitably used as a cellulose raw material for cellulose-derived products. A lower limit of the lignin content is 0.00 mass%.

In the present disclosure, the ozone-treated pulp fiber before forming the pulp fiber raw material has a cellulose content of preferably 87.0 mass% or more, more preferably 90.0 mass% or more, and even more preferably 93.0 mass% or more. Accordingly, the pulp fiber raw material can be suitably used as a cellulose raw material for cellulose-derived products.

In the present disclosure, the cellulose content, the hemicellulose content, and the lignin content in pulp fiber raw material, the ozone-treated pulp fiber, and the like can be measured according to a well-known detergent analysis method.

In the present disclosure, the pulp fiber raw material, preferably, the ozone-treated pulp fiber and the pulp fiber raw material have a beating degree reduction rate of preferably 300 mL or more, more preferably 320 mL or more, even more preferably 340 mL or more, and still more preferably 360 mL or more. Accordingly, the pulp fiber raw material is easily fluffed to easily extract cellulose, in the subsequent step of using the pulp fiber raw material, for example, the cellulose use step of forming a cellulose nanofiber, viscose rayon, cellulose derivative, bioethanol, biobutanol, a molding material, or a processed paper product.

In the production method of the present disclosure, the pulp fiber raw material, preferably, the ozone-treated pulp fiber and the pulp fiber raw material have a beating degree reduction rate of preferably 990 mL or less, more preferably 800 mL or less, even more preferably 700 mL or less, and still more preferably 600 mL or less. By doing so, damage to the pulp fiber raw material and the cellulose to be extracted can be suppressed. The beating degree reduction rate is obtained by a low hemicellulose content in the pulp fiber raw material or the ozone-treated pulp fiber, a low lignin content, and the like.

The beating degree reduction rate is measured according to the following beating degree reduction test.

### <Beating degree reduction test>

(1) The pulp fiber raw material or the ozone-treated pulp fiber is beaten for 1 hour or longer, preferably 2 hours according to the pulp-beating method-Part 1: beater method of JIS P8221-1: 1998.
(2) Samples are collected every 20 minutes after the start of beating, and the beating degree of each sample (Canadian standard freeness) is measured according to the pulp-freeness test method-Part 2: Canadian standard freeness method of JIS P8121-2: 2012. The test may be stopped in a case where the beating degree of the sample is less than 100 mL.
(3) The time (h) is plotted on a horizontal axis and the beating degree (mL) is plotted on a vertical axis, and approximated to a linear function by the least squares method, and an absolute value of a slope is used as the beating degree reduction rate (mL/m). A large value of the beating degree reduction rate means that the reduction in beating degree per unit time is fast, that is, the pulp fiber raw material or the ozone-treated pulp fiber is easily beaten (easily fluffed).

In the present disclosure, the pulp fiber raw material has a water contact angle of preferably 20° or less, more preferably 15° or less, and even more preferably 10° or less. By doing so, the pulp fiber raw material can be easily dispersed in an aqueous solution, in a case where the cellulose is extracted out after being dried and stored. From the above viewpoint, the water contact angle of the pulp fiber raw material may be 0°.

The water contact angle of the pulp fiber raw material can be measured as follows.
(1) An aluminum ring (outer diameter: 43 mm, inner diameter: 40 mm, height: 5 mm) and the pulp fibers for saccharification dried at 120°C for 60 minutes are prepared and left for 24 hours in a constant temperature and constant humidity chamber with a temperature of 20 ± 5°C and a humidity of 65 ± 5% RH.
(2) 1.5 g of the pulp fiber raw material is evenly filled in the aluminum ring, and the pulp fiber raw material is compressed together with the aluminum ring at a pressure of 3 Mpa for 1 minute using a press machine with a smooth bottom face and the surface of the pulp fiber raw material is smoothed.
(3) The water contact angle of the compressed pulp fiber raw material is measured based on 6. sessile drop method of "Method for testing the wettability of the substrate glass surface" of JIS R3257: 1999. As a contact angle measuring device, an automatic contact angle meter CA-V type manufactured by Kyowa Interface Science Co., Ltd. is used. The water contact angle means a value after 200 ms after dropping deionized water.
(4) The water contact angle is measured in 20 different samples, and an average value thereof is used.

In the present disclosure, the pulp fiber raw material has an ash content of preferably 0.65 mass% or less, more preferably 0.50 mass% or less, even more preferably 0.30 mass%, and still preferably 0.20 mass% or less. By doing so, in a case where the cellulose is extracted from the pulp fiber raw material, the metal ion and its precipitate are less likely to damage the equipment and are less likely to disturb the miniaturization of the pulp fiber raw material. The ash content can be lowered by selecting an acid capable of forming a complex with a metal ion contained in excrement as an inactivating agent, particularly a citric acid, for example, in the inactivation step S31 of inactivating the super absorbent polymer.

In the present specification, the ash content means the amount of an inorganic or nonflammable residue left after the organic matter is ashed, and the ash content means the ratio (mass ratio) of the ash content contained in the material to be promoted. The ash content is measured according to "5. Ash content test method" of "2. General test method" of the material standard for menses treatment products. Specifically, the ash content is measured as follows.
(1) A platinum, quartz, or porcelain crucible is preheated at 500°C to 550°C for 1 hour, allowed to cool, and then the mass thereof is precisely weighed.
(2) 2 to 4 g of the pulp fiber raw material dried at 120°C for 60 minutes is collected and put in a crucible, and the mass thereof is weighed precisely, it is weakly heated at first by removing or shifting a lid of the crucible, if necessary, and the temperature is gradually increased to heat at 500°C to 550°C for 4 hours or longer to ash until no carbide remains.
(3) After allowing to cool, the mass is weighed precisely. The residue is ashed again to a constant weight, allowed to cool, and then the mass thereof is precisely weighed to obtain the ash content (mass%).

In the present embodiment, as a preferred embodiment, the method further includes the inactivation step S31 of inactivating absorption performance of the super absorbent polymer in the mixture by treating a mixture using the aqueous solution capable of inactivating the absorption performance of the super absorbent polymer before the ozone treatment step S36 (continuous treatment step), and the first separation step S32 of separating the inactivated super absorbent polymer and the pulp fiber from the aqueous solution before the ozone treatment step S36 (continuous treatment step). As described above, in the present method, as a preferred embodiment, in the inactivation step S31, the water absorption performance of the super absorbent polymer is suppressed by the aqueous solution capable of inactivating the water absorption performance of the super absorbent polymer, and accordingly, at the stage of ozone treatment step S36 (continuous treatment step) which is the subsequent step, the super absorbent polymer can be more easily dissolved by the treatment liquid 52 in a short time.

In the present embodiment, as a preferred embodiment, in the inactivation step S31, the aqueous solution capable of inactivating the water absorption performance of the super absorbent polymer is an acidic aqueous solution, for example, an acidic aqueous solution having a pH of 2.5 or less. As described above, in the present method, as a preferred embodiment, since the aqueous solution capable of inactivating the absorption performance of the super absorbent polymer is an acidic aqueous solution, the super absorbent polymer is more easily inactivated, and accordingly, at the stage of the inactivation step S31, the absorption performance of the super absorbent polymer can be suppressed more reliably. As a result, the super absorbent polymer can be more easily dissolved by the treatment liquid for a short time at the stage of the ozone treatment step S36 (continuous treatment step) which is the subsequent step.

In addition, as another preferred embodiment, the treatment tank 31 may include at least a first treatment tank 31-1 and a second treatment tank 31-2 coupled in series with each other. FIG. 4 is a schematic view showing another configuration example of the apparatus 2 of the ozone treatment step of FIG. 1. The apparatus 2 of FIG. 4 is different from the apparatus 2 of FIG. 2 in that two ozone treatment units 4 are bonded in series, in other words, the first treatment tank 31-1 and the second treatment tank 31-2 are bonded in series. In that case, for example, the first treatment tank 31-1 supplies the pulp fibers-containing material 51 and discharges a first treated liquid (treatment liquid 52-1 of the first treatment tank 31-1), and the second treatment tank 31-2 supplies the first treated liquid and discharges a second treated liquid (treatment liquid 52-2 of the second treatment tank 31-2), thereby treating the pulp fibers-containing material 51 at multiple stages. In that case, compared to the case where one treatment tank 31 having a large capacity is provided, the treatment is performed with new treatment liquids 52-1 and 52-2 for each of the first and second treatment tanks 31-1 and 31-2, and accordingly, for example, the super absorbent polymer that could not be completely dissolved in the first treatment tank (first stage treatment tank) 31-1 can be easily dissolved in the second treatment tank (next stage treatment tank) 31-2, and accordingly, the super absorbent polymer can be dissolved more reliably and can be removed from the fiber.

In addition, as another preferred embodiment, the treatment tank 31 may include an ejector. For example, the ejector includes a driving fluid supply port, a mixed fluid discharge port connected to the treatment tank, and a suction fluid supply port between them, and supplies ozone to the suction fluid supply port while supplying the pulp fiber-containing material 51 to the driving fluid supply port of the ejector, and a mixed solution formed by mixing the pulp fiber-containing material 51 and the ozone in the ejector is ejected to the treatment liquid in the treatment tank from the mixed fluid ejection port.

By supplying the pulp fiber-containing material 51 as the driving fluid and ozone as the suction fluid to the ejector and mixing them in the ejector, the mixture as a mixed fluid obtained by extremely thoroughly mixing the pulp fiber-containing material 51 and the ozone can be efficiently formed. That is, a mixed solution in which the pulp fiber-containing material 51 and ozone are extremely close to each other can be formed. Then, the treatment liquid can be stirred by discharging the mixed liquid into the treatment liquid in the treatment tank. In addition, in a case where the ozone is discharged into the treatment liquid, it is continuously discharged in the state of fine bubbles, so that ozone can be diffused extremely widely in the treatment liquid. As a result, not only the pulp fiber-containing material 51 in the mixed liquid discharged from the ejector, but also the pulp fiber containing the super absorbent polymer in the treatment liquid in the treatment tank, a reaction between the super absorbent polymer and a gaseous material can extremely efficiently proceed.

In the present embodiment, as a preferred embodiment, in the material separation step S1, in the pretreatment step S11, the used sanitary product are kept in the same shape without breaking and the super absorbent polymer is not inactivated and can be expanded extremely with water. Due to that, an extremely high internal pressure can be generated in the used sanitary product, and any portion of the surface thereof can be in a state where it is likely to be burst. Then, in the decomposition step S12, by applying a physical impact to the used sanitary product in such a state, any portion of the surface thereof is torn and the internal absorbent core can be ejected to the outside. Accordingly, the used sanitary product can be decomposed into at least a film (liquid-impermeable sheet) and an absorbent core. At this time, since the film generally maintains its original shape, it can be easily separated from the absorbent core in the subsequent separation step S13. Due to that, the constituent member such as the film can be separated from other constituent members while maintaining the same shape without breaking or the like. Therefore, the constituent members such as the film for sanitary product can be efficiently collected.

In the present embodiment, as a preferred embodiment, by using terpene for removing the adhesive, the hot-melt adhesive for adhering the constituent members of the sanitary product can be dissolved at room temperature. Accordingly, the sanitary product can be easily and neatly separated, the pulp fiber and the super absorbent polymer can be separated from the sanitary product, and the nonwoven fabric and the film can be separated separately while leaving the member form. That is, the pulp fibers, the film, and the nonwoven fabric can be easily collected separately without crushing the sanitary product or going through a complicated separation step. In a case where limonene is used as a terpene, as a side effect of limonene, there is a refreshing citrus odor, and accordingly, the odor derived from excrement can be covered to some extent, and the burden of odor on the operator and the influence of odor on the neighborhood can be reduced. Limonene is a monoterpene and is similar in structure to styrene, and accordingly, a styrene-based hot-melt adhesive commonly used in sanitary product can be dissolved. Since the sanitary product can be cleaned at room temperature, energy costs can be reduced and the generation and diffusion of odors can be suppressed. Terpene has a high oil dirt cleaning effect, and in addition to the effect of dissolving hot-melt adhesive, in a case where there is printing on the film, the printing ink can also be decomposed and removed, and the printed film can also be collected as a high-purity plastic material.

In addition, in a case where an organic acid aqueous solution having a pH of 2.5 or less is used for inactivating the super absorbent polymer, the pulp fiber is difficult to be deteriorated. In a case where a citric acid is used as the organic acid, the effect of removing dirt components derived from excrement can be expected due to the chelating effect and detergency of citric acid. In addition, a sterilizing effect and a deodorizing effect on alkaline odors can be expected.

In addition, by oxidatively decomposing the super absorbent polymer with ozone, it is possible to prevent contamination of pulp fiber and a rapid increase in wastewater due to water absorption of the super absorbent polymer. By adjusting the ozone concentration, it is possible to simultaneously perform oxidative decomposition and sterilization of super absorbent polymer. In addition, in a case where the ozone is used, no chlorine-based chemicals are used, and accordingly it is possible to produce high-quality RPF that does not easily damage a combustion furnace from the collected plastic members. Since no salts are used during the treatment step, there is no residue on the pulp fiber, and high-quality pulp fiber raw material with low ash content can be collected.

In the cellulose use step, as shown in FIG. 1, the pulp fiber raw material can be subjected to the cellulose use step to produce a cellulose-derived product.

Since the pulp fiber raw material produced by the production method of the disclosure has the predetermined hemicellulose content, it is suitable as a cellulose raw material. The cellulose raw material is not particularly limited as long as cellulose is a part of the raw material, and raw materials for various purposes, for example, cellulose nanofibers, viscose rayon, cellulose derivatives, bioethanol, biobutanol, molding materials, and processed paper products are used. The various purposes will be described later.

The production method of the present disclosure can include a cellulose use step of using cellulose from the pulp fiber raw material, after the alkali treatment step. The cellulose use step is not particularly limited as long as cellulose is used, for example, includes a cellulose nanofiber forming step of forming cellulose nanofibers, a viscose rayon forming step of forming viscose rayon, a cellulose derivative forming step of forming a cellulose derivative, a bioethanol forming step of forming bioethanol, a biobutanol forming step of forming biobutanol, a molding material forming step of forming a molding material, or a processed paper product forming step of forming a processed paper product.

The cellulose nanofiber forming step is not particularly limited, and includes a well-known cellulose nanofiber forming method in the technical field. Examples of the cellulose nanofiber forming method include methods disclosed in JP-A-2010-235681 and JP-A-2010-254726.

Regarding the cellulose use step, the viscose rayon forming step is not particularly limited, and includes a well-known viscose rayon forming method in the technical field (for example, a regenerated cellulose fiber forming method, a cellophane forming method, a cellulose sponge forming method). Examples of the viscose rayon forming method include a viscose method and a cuprammonium method. Examples of the viscose rayon include regenerated cellulose fiber, cellophane, and cellulose sponge.

Examples of the above regenerated cellulose fiber include a rayon fiber such as viscose rayon fiber obtained from viscose, polynodic fiber and modar fiber, and a copper ammonia rayon fiber (also referred to as "cupra fiber") obtained from a copper ammonia salt solution of cellulose; and lyocell fiber and tencel fiber which are obtained by an organic solvent spinning method using an organic solvent which is a mixed solution of an organic compound and water and do not pass through a cellulose derivative. Examples of the cellophane include a cellophane tape, a cellophane film, and the like.

Regarding the cellulose use step, the cellulose derivative forming step is not particularly limited, and includes a well-known cellulose derivative forming method in the technical field (for example, semisynthetic cellulose fiber forming method). Examples of the method of forming a cellulose derivative include a method disclosed in JP-A-10-251301. Examples of the above cellulose derivative include a semi-synthetic cellulose fiber, for example, an acetate fiber, for example, a triacetate fiber, and a diacetate fiber. Examples of the cellulose derivative include carboxymethyl cellulose, hydroxyethyl cellulose, hydroxypropyl cellulose, and the like.

Regarding the cellulose use step, the bioethanol forming step is not particularly limited, and includes a well-known bioethanol forming method in the technical field. Examples of the bioethanol forming method include a method disclosed in JP-A-2018-64514.

Regarding the cellulose use step, the biobutanol forming step is not particularly limited, and includes a well-known biobutanol forming method in the technical field. Examples of the biobutanol forming method include a method disclosed in JP-A-2015-517303.

Regarding the cellulose use step, the molding material forming step is not particularly limited, and includes a well-known molding material forming method in the technical field. Examples of the molding material include a packaging cushioning material, a container, and the like.

Regarding the cellulose use step, the processed paper product forming step is not particularly limited, and includes a well-known processed paper product forming method in the technical field. Examples of the processed paper product include a filter base paper and functional paper. Examples

### [Manufacturing Example 1]

A recycled pulp fiber was produced from a plurality of types of used disposable diapers collected from nursing facility according to the methods shown in FIGs. 1 and 2. The conditions related to the ozone treatment step S36 were as follows.
(i) Pulp fiber-containing material 51
   - Concentration: 1 mass% (concentration of pulp fiber and super absorbent polymer)
   - pH: 2.4
(ii) Treatment tank 31
   - Capacity: 60L
   - Height: 2.6m
   - First flow rate: 2 L/min
   - Second flow rate: 2 L/min
   - In-tank treatment time: 30 minutes
   - V/W: 100
   - RO/V: 0.033
(iii) Ozone-containing gas
   - Ozone concentration: 200 g/m³
   - Shape: Nanobubbles

The inactivation step S31 was carried out with a citric acid having a pH of 2.0, the ozone treatment step S36 was carried out under the conditions described above, and the obtained recycled pulp fiber was dried at 120°C for 60 minutes to obtain an ozone-treated pulp fiber No. 1.

### [Manufacturing Example 2]

An ozone-treated pulp fiber No. 2 was obtained in the same manner as in the manufacturing example 1, except that the in-tank treatment time was changed to 15 minutes.

### [Comparative Manufacturing Example 1]

NBKP virgin pulp fiber was used as an ozone-treated pulp fiber No. 3.

A cellulose content, a hemicellulose content, and a lignin content ( mass%) of each of the ozone-treated pulp fibers No. 1 to No. 3 were measured. The results are indicated in Table 1.

[Table 1]

**Table1**

| Example No. | Manufacturing Example 1 | Manufacturing Example 2 | Comparative Manufacturing Example 3 |
|---|---|---|---|
| Ozone-treated pulp fiber No. | No. 1 | No. 2 | No. 3 |
| Ozone treatment | Performed | Performed | Not performed |
| Cellulose content (mass%) | 92.7 | 89.9 | 89.8 |
| Hemicellulose content (mass%) | 7.1 | 10.0 | 10.1 |
| Lignin content (mass%) | < 0.10 | < 0.10 | 0.16 |

As shown in Table 1, the ozone-treated pulp fiber No. 1 of the manufacturing example 1 has a cellulose content of 92.7 mass%, a hemicellulose content of 7.1 mass%, and a lignin content of less than 0.1 mass%. Therefore, the hemicellulose content can be further decreased by subjecting the ozone-treated pulp fiber No. 1 to the well-known alkali treatment step of the related art.

Therefore, by subjecting the ozone-treated pulp fiber No. 1 to the alkali treatment step under the milder conditions than in the well-known step of the related art, the hemicellulose is decomposed while suppressing the decomposition of cellulose, and it is expected that a pulp fiber raw material having a high cellulose yield and a cellulose content (low hemicellulose content) can be obtained.

### [Example 1]

The alkali treatment step was performed by using the ozone-treated pulp fiber No. 2 manufactured in the manufacturing example 2.

The details of the alkali treatment step are as follows.
(1) The ozone-treated pulp fiber No. 2 was dried at 40°C for 1 hour and then pulverized with a centrifugal pulverizer to form a sample for measurement.
(2) In a thermostatic chamber at 20°C, approximately 1.0 g of a sample and 25 mL of a sodium hydroxide (NaOH) aqueous solution having a normality specified in Table 2 are added to the container, and the sample is crushed in the container for 5 minutes.
(3) The crushed sample is left still for 30 minutes.
(4) 25 mL of water at 20°C is added to the container, and the contents in the container are stirred for 1 minute. The water corresponds to type A3 of "water used for the test of irrigation/sewage" of JISK0557: 1998.
(5) The contents in the container are suction-filtered with a glass filter to obtain a filtrate.
(6) The filtrate is cleaned with water and then neutralized.
(7) 40 mL of a 10 mass% acetic acid aqueous solution is added to the neutralized filtrate, and the mixture is allowed to stand for 5 minutes.
(8) The filtrate after standing is cleaned in boiling water, and then dried to form a pulp fiber raw material No. 2.
(9) Using a known detergent method, the composition of the pulp fiber raw material No. 2 is analyzed. Table 2 shows the normality of the sodium hydroxide aqueous solution and the results of the alkali treatment step. The composition with a NaOH concentration of 0.0 N means a composition before starting the alkali treatment step.

### [Table 2]

**Table2**

| | | | | | |
|---|---|---|---|---|---|
| NaOH concentration (N) | 0.0 | 0.5 | 1.0 | 2.8 | 5.3 |

| Pulp fiber raw material No. 2 | | | | | |
|---|---|---|---|---|---|
| Cellulose (mass%) | 89.9 | 94.8 | 96.7 | 96.5 | 97.5 |
| Hemicellulose and others (mass%) | 10.1 | 5.2 | 3.3 | 3.5 | 2.5 |

It was confirmed that, in the alkali treatment step, the pulp fiber raw material No. 2 having a low hemicellulose concentration can be formed, not only at a high NaOH concentration (5.3N), but also at a low NaOH concentration (0.5N). When the ozone-treated pulp fiber No. 3 (virgin pulp fiber of NBKP) of the comparative manufacturing example 1 was subjected to the alkali treatment step, the concentration of hemicellulose is less likely to decrease at low NaOH concentration (0.5 N to 2.8 N), and high NaOH concentration (5.3 N) was necessary in order to decrease the hemicellulose concentration.

### REFERENCE SIGNS LIST

- 31: Treatment tank
- 32: Pulp fiber-containing material supply port
- 33: Treatment liquid discharge port
- 43: Ozone-containing gas supply port
- 51: Pulp fiber-containing material
- 52: Treatment liquid
- 53: Ozone-containing gas
- S36: Ozone treatment step

## Claims

1. A method of producing a pulp fiber raw material as a cellulose raw material from pulp fibers to be treated, the method comprising:
an ozone treatment step of forming ozone-treated pulp fibers from the pulp fibers to be treated by supplying an ozone-containing gas to a treatment tank containing a treatment liquid containing a pulp fiber-containing material containing the pulp fibers to be treated; and
an alkali treatment step of treating the ozone-treated pulp fibers with an alkaline aqueous solution and forming the pulp fiber raw material having a hemicellulose content of less than 8.0 mass%.

2. The method according to claim 1, wherein
the pulp fiber raw material has a lignin content of 0.10 mass% or less.

3. The method according to claim 1 or 2, wherein
the pulp fiber raw material has a cellulose content of 94.0 mass% or more.

4. The method according to any one of claims 1 to 3, wherein
in the ozone treatment step, the ozone-containing gas is supplied to the treatment tank so that the ozone-treated pulp fibers have a hemicellulose content of 10.0 mass% or less.

5. The method according to any one of claims 1 to 4, wherein
in the ozone treatment step, the ozone-treated pulp fibers are formed by bringing the ozone-containing gas into contact with the pulp fiber-containing material so that a CT value, which is a product of an ozone concentration in the ozone-containing gas and a treatment time, is 100 to 12,000 ppm-min.

6. The method according to any one of claims 1 to 5, wherein
in the alkali treatment step, the alkaline aqueous solution has a normality of 3.0 N or less.

7. The method according to claim 6, wherein
in the alkali treatment step, the alkaline aqueous solution is added at a ratio of 10 to 40 L per 1 kg of dry mass of the ozone-treated pulp fibers.

8. The method according to any one of claims 1 to 7, wherein
the pulp fiber raw material is a raw material for a cellulose nanofiber, viscose rayon, cellulose derivative, bioethanol, biobutanol, a molding material, or a processed paper product.

9. The method according to any one of claims 1 to 8, wherein
the method further comprises a cellulose use step of forming a cellulose nanofiber, viscose rayon, cellulose derivative, bioethanol, biobutanol, a molding material, or a processed paper product from the pulp fiber raw material.

10. A pulp fiber raw material as a cellulose raw material, wherein
the pulp fiber raw material has a hemicellulose content of less than 8.0 mass%.

11. A pulp fiber raw material as a cellulose raw material, wherein
the pulp fiber raw material has a cellulose content of 94.0 mass% or more.

12. The pulp fiber raw material according to claim 10 or 11, wherein
the pulp fiber raw material has a lignin content of 0.10 mass% or less.

13. The pulp fiber raw material according to any one of claims 10 to 12, wherein
the pulp fiber raw material is derived from a used sanitary product containing pulp fibers.

14. The pulp fiber raw material according to any one of claims 10 to 13, wherein
the pulp fiber raw material is a raw material for a cellulose nanofiber, viscose rayon, cellulose derivative, bioethanol, biobutanol, a molding material, or a processed paper product.

15. A cellulose nanofiber, viscose rayon, cellulose derivative, bioethanol, biobutanol, a molding material, or a processed paper product, which is made from the pulp fiber raw material according to any one of claims 10 to 14.
